# EUROPÄISCHE PATENTSCHRIFT

(11) **EP 3 365 593 B1**
(45) Veröffentlichungstag und Bekanntmachung des Hinweises auf die Patenterteilung: **22.05.2019**
(21) Anmeldenummer: 16791301.1
(22) Anmeldetag: 24.10.2016
(51) Int. Cl.: F21S 41/143, F21S 41/265

(54) **MIKROPROJEKTIONS-LICHTMODUL FÜR FAHRZEUGSCHEINWERFER**
MICRO-PROJECTION LIGHT MODULE FOR A VEHICLE HEADLIGHT
MODULE LUMINEUX À MICROPROJECTION POUR PROJECTEUR DE VÉHICULE

(30) Priorität: 23.10.2015 AT 509062015
(43) Veröffentlichungstag der Anmeldung: 29.08.2018
(73) Patentinhaber: ZKW Group GmbH, 3250 Wieselburg (AT)
(72) Erfinder: MANDL, Bernhard, 3200 Ober-Grafendorf (AT)
(74) Vertreter: Patentanwaltskanzlei Matschnig & Forsthuber OG
(86) Internationale Anmeldenummer: PCT/AT2016/060087
(87) Internationale Veröffentlichungsnummer: WO 2017/066817

(56) Entgegenhaltungen:
- AT-B1- 514 967
- CH-A- 296 715
- DE-A1- 2 235 201
- DE-A1- 3 926 618
- US-A1- 2015 036 373
- US-B1- 6 769 777

## Beschreibung

Die Erfindung betrifft Mikroprojektions-Lichtmodul für einen Fahrzeugscheinwerfer, umfassend zumindest eine Lichtquelle sowie zumindest eine Projektionseinrichtung, welche das von der zumindest einen Lichtquelle austretende Licht in einen Bereich vor dem Kraftfahrzeug in Form von zumindest einer Lichtverteilung abbildet, wobei die Projektionseinrichtung eine Eintrittsoptik, welche eine, zwei oder mehr Mikro-Eintrittsoptiken aufweist, welche vorzugsweise in einem Array angeordnet sind, und eine Austrittsoptik, welche eine, zwei oder mehr Mikro-Austrittsoptiken aufweist, welche vorzugsweise in einem Array angeordnet sind, wobei jeder Mikro-Eintrittsoptik genau eine Mikro-Austrittsoptik zugeordnet ist, wobei die Mikro-Eintrittsoptiken derart ausgebildet und/oder die Mikro-Eintrittsoptiken und die Mikro-Austrittsoptiken derart zueinander angeordnet sind, dass im Wesentlichen das gesamte aus einer Mikro-Eintrittsoptik austretende Licht genau nur in die zugeordnete Mikro-Austrittsoptik eintritt, und wobei das von den Mikro-Eintrittsoptiken vorgeformte Licht von den Mikro-Austrittsoptiken in einen Bereich vor dem Kraftfahrzeug als zumindest eine Lichtverteilung abgebildet wird.

Des Weiteren betrifft die Erfindung eine Beleuchtungsvorrichtung mit zumindest einem solchen Mikroprojektions-Lichtmodul.

Darüber hinaus betrifft die Erfindung einen Fahrzeugscheinwerfer mit zumindest einer solchen Beleuchtungsvorrichtung.

Mikroprojektions-Lichtmodule der oben genannten Art sind dem Stand der Technik bekannt. In AT 201350692 der Anmelderin ist ein Mikroprojektions-Lichtmodul für einen Fahrzeugscheinwerfer zur Erzeugung von zumindest einer Lichtverteilung eines vorgegebenen Typs offenbart. Problematisch bei einem solchen Mikroprojektions-Lichtmodulen ist geringe optische Effizienz und eine große Toleranzempfindlichkeit. Das in AT 201350692 beschriebene Mikroprojektions-Lichtmodul weist bis zu fünf optisch relevanten Baukomponenten auf, wobei jede Baukomponente durch Lichtreflexionen an ihrer Grenzflächen zu Lichtverlusten (zu Verlusten der optischen Effizienz) beiträgt. Darüber hinaus leidet dieses Mikroprojektions-Lichtmodul unter einer hohen Toleranzempfindlichkeit bezüglich der Positionierung der einzelnen Baukomponenten zueinander. Toleranzen in der Positionierung in dem 0,1mm - Bereich führen zu Verschiebungen um einige Grad im Lichtbild und infolgedessen zu unscharfen Lichtbildern.

Es ist eine Aufgabe der vorliegenden Erfindung, ein Mikroprojektions-Lichtmodul für einen Fahrzeugscheinwerfer zu schaffen, welches eine hohe optische Effizienz und eine niedrige Toleranzempfindlichkeit bezüglich der Positionierung der einzelnen Baukomponenten aufweist und sich darüber hinaus durch einen geringeren Herstellungskostenaufwand auszeichnet.

Diese Aufgabe wird mit einem eingangs erwähnten Mikroprojektions-Lichtmodul dadurch gelöst, dass erfindungsgemäß der zumindest einen Lichtquelle eine Vorsatzoptikeinrichtung zugeordnet ist, in welche zumindest eine Vorsatzoptikeinrichtung die zumindest eine Lichtquelle das von ihr emittierte Licht einstrahlt, und welche Vorsatzoptikeinrichtung derart ausgebildet ist, dass das aus ihr austretende Licht im Wesentlichen parallel gerichtet ist, und die Eintrittsoptik zumindest eine plane Grenzfläche aufweist, wobei die zumindest eine plane Grenzfläche der Vorsatzoptikeinrichtung zugewandt ist.

Dabei muss angemerkt sein, dass der Abstand zwischen der Austrittsfläche der Vorsatzoptikeinrichtung (Vorsatzoptikeinrichtung-Austrittsfläche) und der Eintrittsfläche der Eintrittsoptik einstellbar ist, wodurch sich ein Vorteil bei der Justierung des Mikroprojektions-Lichtmoduls ergibt.

Des Weiteren hat eine plan ausgebildete Grenzfläche der Vorsatzoptikeinrichtung beispielsweise zum Vorteil, dass beim Auftreffen des durch die Vorsatzoptikeinrichtung im Wesentlich parallel gebündelten Lichts auf die plane Grenzfläche im Wesentlichen keine Reflexionen unter einem schiefen Winkel auftreten, wodurch die Lichtverluste gering gehalten werden können.

Dabei kann es bezüglich der optischen Anordnung zweckmäßig sein, wenn das aus der Vorsatzoptikeinrichtung austretende Licht auf die zumindest eine plane Grenzfläche auftrifft.

Hinsichtlich der Reduktion der Lichtreflexionen an der Eintrittsgrenzfläche der Eintrittsoptik kann vorteilhaft sein, wenn das aus der Vorsatzoptikeinrichtung austretende Licht im Wesentlichen die ganze Grenzfläche bestrahlt.

Dies kann beispielsweise dann der Fall sein, wenn die Vorsatzoptikeinrichtung - Austrittsfläche und die plane Grenzfläche kongruent ausgebildet und kongruent angeordnet sind.

"Kongruent ausgebildet" bedeutet dabei nichts anderes, als dass die Vorsatzoptikeinrichtung -Austrittsfläche und die plane Grenzfläche dieselbe Form der Grundfläche aufweisen, mit im Prinzip beliebiger räumlicher Anordnung. "Kongruent" angeordnet bedeutet, dass diese Grundflächen zusätzlich auch noch so angeordnet sind, dass sie entweder unmittelbar deckungsgleich zusammenfallen oder zwar beabstandet sind, bei einem Verschieben normal zu einer der Grundflächen aber deckungsgleich ineinander übergehen würden. Hinsichtlich Bildung eines parallelen Strahlbündels kann es vorteilhaft sein, wenn die Vorsatzoptikeinrichtung als ein Kollimator ausgebildet ist.

Es kann von besonderem Vorteil sein, wenn die Vorsatzoptikeinrichtung mit der Eintrittsoptik einstückig ausgebildet ist. Dabei reduziert sich die Anzahl der lichtbrechenden Flächen um zwei. Die plane Kollimator-Austrittsfläche und die plane Grenzfläche sind bei dieser Ausführungsform nicht mehr vorhanden. Da jede Interaktion zwischen Licht und Grenzfläche mit Reflexionsverlusten verbunden ist, lässt sich mit dieser Variante eine Steigerung der Effizienz erzielen. Des Weiteren werden durch die einstückige Ausbildung der Vorsatzoptikeinrichtung und der Eintrittsoptik geringere Herstellungskosten erreicht. Die Entformbarkeit für Kunststoff-Spritzguss ist bei einer einstückig ausgebildeten optisch relevanten Baukomponente gegeben, womit das Werkzeug für eine eigenständige Eintrittsoptik eingespart und ergo die Kosteneffizient erhöht werden kann.

Außerdem kann es vorgesehen sein, dass eine Mikro-Eintrittsoptik und eine der einen Mikro-Eintrittsoptik zugeordnete Mikro-Austrittsoptik ein Mikro-Optiksystem bilden, welches Mikro-Optiksystem zumindest einen Mikro-Optik-Brennpunkt aufweist. Hinsichtlich der Erzeugung des Lichtbildes kann es zweckdienlich sein, wenn jede Mikro-Eintrittsoptik das durch sie durchtretende Licht in den zumindest einen Mikro-Optik-Brennpunkt fokussiert.

Des Weiteren kann es mit Vorteil vorgesehen sein, dass ein Mikro-Optik-Brennpunkt jeder Mikro-Eintrittsoptik in Lichtaustrittsrichtung vor der zugeordneten Mikro-Austrittsoptik liegt, wobei die Mikro-Eintrittsoptiken das durch sie durchtretende Licht in vertikaler Richtung jeweils auf den vor der Mikro-Austrittsoptik liegenden Mikro-Optik-Brennpunkt fokussieren, und wobei die Mikro-Austrittsoptiken einen jeweils mit dem Mikro-Optik-Brennpunkt der zugeordneten Mikro-Eintrittsoptik zusammenfallenden Brennpunkt aufweisen.

Licht wird also in den Brennpunkt fokussiert des Mikro-Optiksystems und anschließend nach dem Durchtritt durch die Mikro-Austrittsoptik entsprechend in der vertikalen Richtung kollimiert und in einen Bereich vor dem Fahrzeug projiziert.

Hinsichtlich der Erzeugung von Lichtverteilungen kann es vorteilhaft sein, wenn jedes Mikro-Optiksystem das durch es durchtretende Licht in horizontaler Richtung aufweitet.

Dazu fokussiert jedes Mikro-Optiksystem das durchtretende Licht in vertikaler Richtung auf einen Mikro-Optik-Brennpunkt, welcher vorzugsweise hinter der Mikro-Eintrittsoptik und vor der Mikro-Austrittsoptik liegt. Dieses Licht tritt weiters durch die Mikro-Austrittsoptik durch und wird nun in horizontaler Richtung in einen Brennpunkt fokussiert, welcher vorzugsweise hinter der Mikro-Austrittsoptik liegt.

Dabei beziehen sich die Begriffe "vor" und "hinter" auf die Hauptausbreitungsrichtung des vom Mikroprojektions-Lichtmodul abgestrahlten Lichts.

Hinsichtlich der Verluste durch Totalreflexion des Lichts bei dessen Austritt aus der Eintrittsoptik kann es vorteilhaft sein, wenn jede Mikro-Eintrittsoptik eine gekrümmte Grenzfläche aufweist, welche gekrümmte Grenzfläche einen Krümmungsradius-Minimalwert aufweist. Das durch die plane Grenzfläche in die Eintrittsoptik eingedrungene Licht tritt also an der gekrümmten Grenzfläche aus. Dabei tritt das Licht aus einem Medium mit einem höheren Brechungsindex (z.B. Glas, Kunststoff, etc.) aus als das Medium (z.B. Luft) in welches das Licht eindringt. Dabei kann es bekannterweise zu Totalreflexionen und ergo zu den zusätzlichen Lichtverlusten an dieser Grenzfläche kommen. Daher ist es ratsam, einen gewissen minimalen Wert der Krümmungsradien der Grenzflächen der Mikro-Eintrittsoptiken einzuhalten, an welchen Grenzflächen das Licht aus den Mikro-Eintrittsoptiken austritt, und dadurch die Totalreflexionen gering zu halten.

Es kann zweckdienlich sein, wenn jede Mikro-Eintrittsoptik als eine Sammeloptik oder als eine Freiform-Optik oder als eine Fresnel-Linse ausgebildet ist.

Darüber hinaus kann es vorteilhaft sein, wenn jede Mikro-Austrittsoptik als eine Projektionsoptik oder als eine sphärische Linse oder als eine asphärische Linse oder als eine Freiform-Linse oder als eine Fresnel-Linse ausgebildet ist.

Aus bautechnischen Gründen kann es ein Vorteil bringen, wenn der Vorsatzoptikeinrichtung zugewandten Grenzflächen von einander zugeordneten Mikro-Eintrittsoptiken und Mikro-Austrittsoptiken kongruent zueinander, vorzugsweise plan ausgebildet und vorzugsweise auch kongruent zueinander angeordnet sind.

"Kongruent ausgebildet" bedeutet auch hier nichts anderes, als dass die Grenzflächen von einander zugeordneten Mikro-Optiken dieselbe Form der Grundfläche aufweisen, mit im Prinzip beliebiger räumlicher Anordnung. "Kongruent" angeordnet bedeutet, dass diese Grundflächen zusätzlich auch noch so angeordnet sind, dass sie entweder unmittelbar deckungsgleich zusammenfallen oder zwar beabstandet sind, bei einem Verschieben normal zu einer der Grundflächen aber deckungsgleich ineinander übergehen würden.

Hinsichtlich der Reduktion der Abbildungsfehler kann es vorteilhaft sein, wenn die optischen Achsen von einander zugeordneten Mikro-Eintrittsoptiken und Mikro-Austrittsoptiken parallel zueinander verlaufen, vorzugsweise zusammenfallen.

Es kann mit Vorteil vorgesehen sein, dass zwischen der Eintrittsoptik und der Austrittsoptik zumindest eine erste Blendenvorrichtung angeordnet ist.

Dabei ist es besonders vorteilhaft, wenn die erste Blendenvorrichtung in einer Ebene liegt, welche von den Mikro-Optik-Brennpunkten aufgespannt ist, wobei die erste Blendenvorrichtung für zumindest ein Paar von einander zugeordneten Mikro-Eintritts- und Mikro-Austrittsoptiken, vorzugsweise für mehrere Paare und insbesondere für alle Paare eine Blende mit jeweils zumindest einer, beispielsweise genau einer optisch wirksamen Blendenkante aufweist.

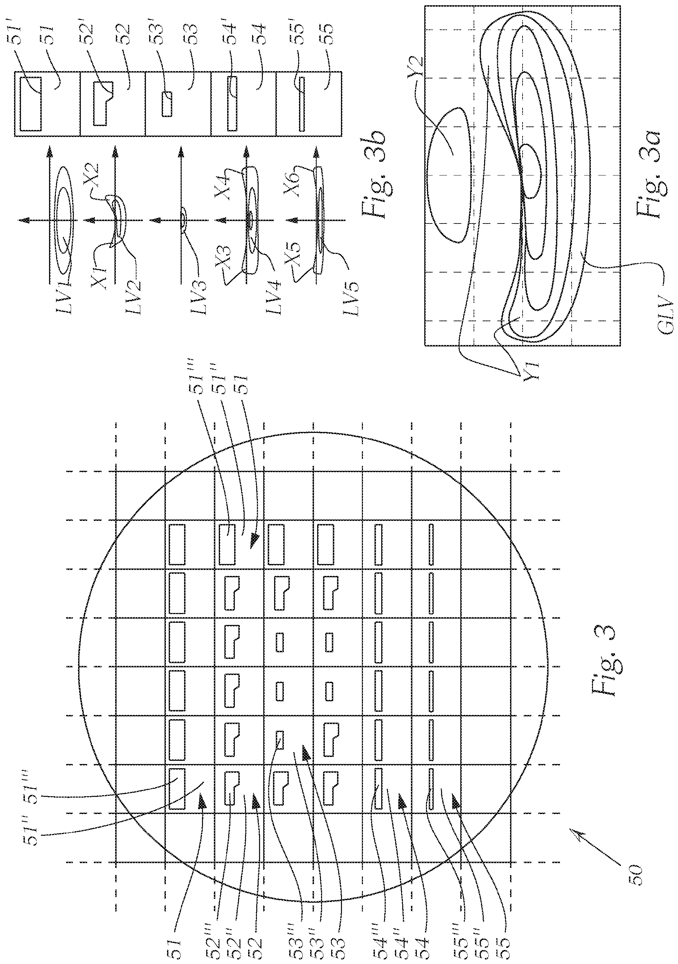

Verwendung der ersten Blendenvorrichtung kann von Vorteil sein, wenn die Erzeugung von den Lichtverteilungen unterschiedlicher Typen erwünscht ist. Dabei wird mithilfe von den optisch wirksamen Blendenkanten das Lichtbild beschnitten und an das gewünschte Lichtbild angepasst (siehe auch Figuren 3, 3a, 3b).

Außerdem kann es zweckmäßig sein, wenn zwischen der Eintrittsoptik und der Austrittsoptik zumindest eine zweite Blendenvorrichtung angeordnet ist.

Dabei kann es vorgesehen sein, dass die zweite Blendenvorrichtung zwischen der ersten Blendenvorrichtung und der Austrittsoptik angeordnet ist.

Darüber hinaus kann es vorgesehen sein, dass die zweite Blendenvorrichtung zwischen Eintrittsoptik und der ersten Blendenvorrichtung angeordnet ist.

Des Weiteren kann es von Vorteil sein, wenn die zweite Blendenvorrichtung für zumindest ein Paar von einander zugeordneten Mikro-Eintritts- und Mikro-Austrittsoptiken, vorzugsweise für mehrere Paare und insbesondere für alle Paare eine Blende mit jeweils zumindest einer, beispielsweise genau einer optisch wirksamen Blendenkante aufweist.

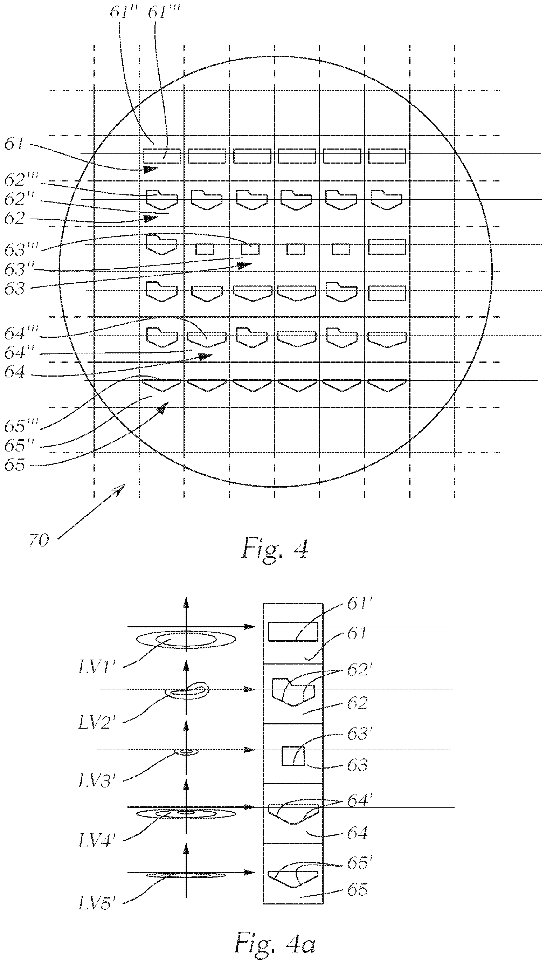

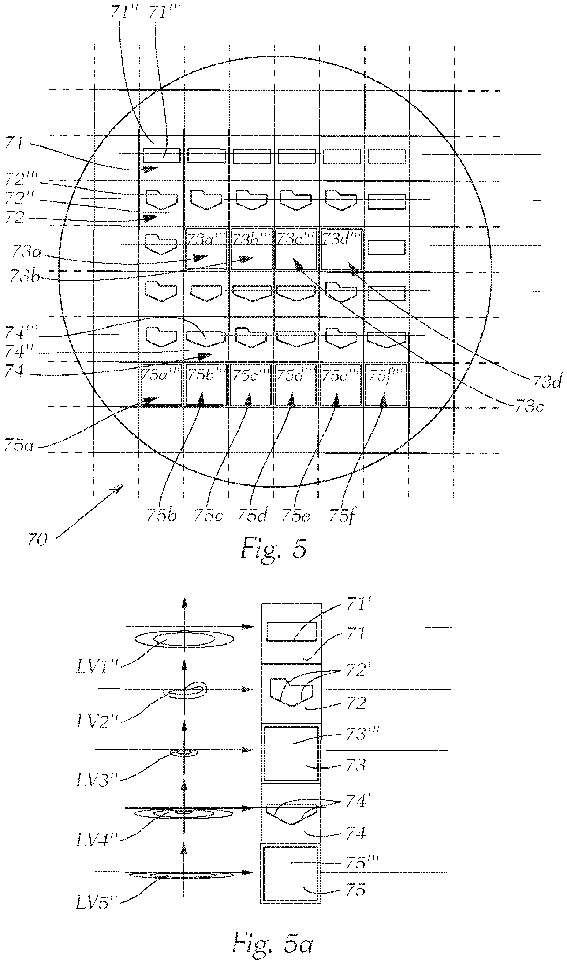

Einführung einer zweiten Blendenvorrichtung ermöglicht die Abbildungsfehler zu reduzieren bzw. zu korrigieren, welche durch das Übersprechen zwischen den Mikro-Optiksystemen, d.h. wenn das Licht in ein Mikro-Optiksystem eintritt aber durch ein anderes, meistens benachbartes Mikro-Optiksystem austritt, und / oder durch Aberration des Lichtes entstehen (siehe auch Figuren 4a, 5a).

Hinsichtlich der Herstellung der zweiten Blendenvorrichtung kann es vorteilhaft sein, wenn alle Blenden der zweiten Blendenvorrichtung identische Blendenkanten aufweisen. Hinsichtlich einer besseren Korrektur der Abbildungsfehler kann zweckdienlich sein, wenn zumindest zwei Blenden der zweiten Blendenvorrichtung unterschiedlich gestaltete Blendenkanten aufweisen.

Dabei kann es vorteilhaft sein, wenn zumindest eine der optisch wirksamen Blendenkanten einen giebelförmigen Verlauf aufweist.

Darüber hinaus kann vorgesehen sein, dass zumindest eine obere oder eine untere, bezüglich der vertikalen Richtung, optisch wirksame Blendenkante der Blende einen schräg, von der optischen Achse nach außen der Blende hin, aufsteigenden Verlauf aufweist.

Hinsichtlich der Herstellung kann es zweckmäßig sein, wenn die erste Blendenvorrichtung und die zweite Blendenvorrichtung identisch ausgebildet sind.

Bei einer praxisbewährten Ausführungsform ist vorgesehen, dass die Austrittsoptik mit der zumindest einen zweiten Blendenvorrichtung einstückig ausgebildet ist.

Dabei kann es zweckdienlich sein, wenn die zweite Blendenvorrichtung auf der der Eintrittsoptik zugewandten Grenzfläche der Austrittsoptik angeordnet ist.

Grundsätzlich weist eine Projektionseinrichtung, wie oben beschrieben, eine Mehrzahl an Mikro-Optiksystemen, also Paaren bestehen aus jeweils einer Mikro-Eintrittsoptik und einer Mikro-Austrittsoptik auf. In der einfachsten Ausgestaltung ohne Blendenvorrichtungen erzeugen alle Mikro-Optiksysteme dieselbe Lichtverteilung, welche (Teil-)Lichtverteilungen in Summe z.B. eine Fernlichtverteilung bilden. Hier wird dabei der Einfachheit halber davon ausgegangen, dass mit genau einem Mikroprojektions-Lichtmodul eine vollständige Lichtverteilung erzeugt wird. In der Praxis kann aber auch vorgesehen sein, dass zur Erzeugung der Gesamtlichtverteilung zwei oder auch mehrere erfindungsgemäße Mikroprojektions-Lichtmodule verwendet werden. Dies kann z.B. dann sinnvoll sein, wenn etwa aus Platzgründen nicht eine Aufteilung der Bauteile auf unterschiedliche Positionen im Scheinwerfer notwendig ist.

Zur Erzeugung einer abgeblendeten Lichtverteilung, etwa einer Abblendlichtverteilung, welche in bekannter Weise eine Hell-Dunkel-Grenze aufweist, kann nun vorgesehen sein, dass jedem Mikro-Optiksystem mehr oder weniger identische Blenden im Strahlengang zugeordnet sind, sodass alle Mikro-Optiksysteme eine Lichtverteilung mit einer Hell-Dunkel-Grenze erzeugen. Die Überlagerung aller Lichtverteilungen ergibt dann als Gesamtlichtverteilung die abgeblendete Lichtverteilung.

Die Blenden können dabei in diesem Fall wie auch in allen anderen als einzelne Blenden ausgeführt sein (z.B. in Form einer undurchlässigen Schicht, beispielsweise einer aufgedampften Schicht, etc.), welche die erste Blendenvorrichtung "bilden", es kann sich aber auch um einen Blendenvorrichtungs-Bauteil handeln, etwa eine ebene Folie etc., in welche entsprechende Öffnungen zum Durchtritt von Licht vorgesehen sind. Dabei kommt es zu, wie oben erwähnt, den Abbildungsfehlern, welche nun durch das Einfügen der zweiten Blendenvorrichtung reduziert werden können.

Darüber hinaus kann es auch vorgesehen sein, dass unterschiedliche Blenden vorgesehen sind, d.h., dass einer oder mehreren Mikro-Optiksystemen eine erste Blende der ersten Blendenvorrichtung und eine zweite Blende der zweiten Blendenvorrichtung zugeordnet ist, einer oder mehreren anderen Mikro-Optiksystemen zumindest jeweils eine andere, mit der ersten Blende identische oder von der ersten Blende verschiedene Blende der ersten Blendenvorrichtung (oder keine Blende) und eine andere, mit der zweiten Blende identische oder von der zweiten Blende verschiedene, Blende der zweiten Blendenvorrichtung (oder keine Blende), usw., sodass unterschiedliche Mikro-Optiksysteme unterschiedliche Lichtverteilungen bilden. Durch selektives Aktivieren einzelner Mikro-Optiksysteme, wozu es allerdings notwendig ist, dass diesen eigene, zumindest gruppenweise separat ansteuerbare Lichtquellen zugeordnet sind, können auf diese Weise einzelne, unterschiedliche Lichtverteilungen erzeugt werden, die auch in Überlagerung betrieben werden können.

Des Weiteren kann es zweckmäßig sein, wenn die Projektionseinrichtung bestehend aus Eintrittsoptik und Austrittsoptik aus zwei voneinander getrennten Bauteilen gebildet ist und die Austrittsoptik in Bezug auf die Eintrittsoptik verschiebbar gelagert ist, wobei die Austrittsoptik und/oder die zweite Blendenvorrichtung - in Einbaulage des Mikroprojektions-Lichtmoduls - in vertikaler und/oder horizontaler Richtung und/oder parallel zu der Eintrittsoptik verschiebbar ist.

Dabei kann es besonders vorteilhaft sein, wenn zum Verschieben der Austrittsoptik und/oder der zweiten Blendenvorrichtung in jeweils einer Richtung jeweils ein Aktuator, vorzugsweise ein Piezoaktuator vorgesehen ist.

Bei dieser Ausführungsform des erfindungsgemäßen Mikroprojektions-Lichtmoduls wird eine benutzerfreundliche Justierung der Projektionseinrichtung gewährt.

Außerdem kann es vorteilhaft sein, wenn die Lichtquelle zumindest eine halbleiterbasierte Lichtquelle umfasst, welche halbleiterbasierte Lichtquelle vorzugsweise eine, zwei oder mehr LEDs und/oder Laserdioden aufweist, wobei die LEDs und/oder Laserdioden vorzugsweise unabhängig voneinander ansteuerbar sind.

Unter "ansteuerbar" ist hier in erster Linie das Ein- und Ausschalten zu verstehen. Zusätzlich kann darunter auch das Dimmen der LEDs (Leuchtdioden) und/oder Laserdioden der Lichtquellen verstanden werden.

Darüber hinaus kann es vorgesehen sein, dass bei zwei oder mehr Lichtquellen für die Mikroprojektions-Lichtmodul die Lichtquellen unabhängig voneinander ansteuerbar sind.

Unter "unabhängig voneinander" ist dabei zu verstehen, dass tatsächlich alle Lichtquellen unabhängig voneinander angesteuert werden können, oder dass die Lichtquellen gruppenweise unabhängig voneinander angesteuert werden können.

Obendrein kann es vorgesehen sein, dass jedem Mikro-Optiksystem bestehend aus einer Mikro-Eintrittsoptik und einer Mikro-Austrittsoptik genau eine, vorzugsweise halbleiterbasierte, Lichtquelle, welche vorzugsweise genau eine Leuchtdiode (LED) oder genau eine Laserdiode umfasst, zugeordnet ist.

Bei einer praxisbewährten Ausführungsform ist vorgesehen, dass zwei oder mehr Lichtquellen-Gruppen vorgesehen sind, wobei jede Lichtquellen-Gruppe zumindest eine Lichtquelle umfasst, und wobei die Lichtquellen einer Lichtquellen-Gruppen Licht derselben Farbe emittieren, und wobei die Lichtquellen unterschiedlicher Lichtquellen-Gruppen Licht unterschiedlicher Farbe emittieren, und wobei jede Lichtquellen-Gruppe einen eigens dieser Lichtquellen-Gruppe zugeordneten Bereich der zumindest einen Projektionseinrichtung beleuchten, und wobei die unterschiedlichen Bereiche identisch ausgebildet bzw. zur Erzeugung identischer Lichtverteilungen ausgebildet sind.

Dabei ist zu beachten, dass die Position der ersten Blendenvorrichtung und /oder der zweiten Blendenvorrichtung und/oder die Form der Eintrittsoptiken (beispielsweise die Dicke der jeweiligen Eintrittsoptik und/oder die Krümmungen der die Eintrittsoptiken bildenden Mikro-Eintrittsoptiken) an die jeweilige Lichtquellen-Gruppe angepasst werden sollte. Wie oben erwähnt, ist die erste Blendenvorrichtung vorzugsweise in der Brennfläche der Projektionseinrichtung angeordnet. Durch die Dispersion (Abhängigkeit des Brechungsindex von der Wellenlänge des Lichts) des Materials, aus dem die Eintritts- und die Austrittsoptiken bestehen, sind die Positionen der Brennpunkte der Mikro-Optiksysteme für jede Farbe (grün, rot oder blau) verschieden. Infolgedessen fallen die Brennflächen der mit z.B. rotem, grünen oder blauen Licht bestrahlten Teile einer und derselben Projektionseinrichtung oder der bestrahlten Projektionseinrichtungen nicht notgedrungen zusammen. Dies kann wiederum zu Farbfehlern (Farblängs- und/oder Farbquerfehler) im Lichtbild (in der abgestrahlten Lichtverteilung) führen, wenn die Position der ersten Blendenvorrichtung und eventuell auch der zweiten Blendenvorrichtung an die Farbe des von den Lichtquellen abgestrahlten Lichts angepasst wird.

Dabei kann zweckdienlich sein, wenn drei Lichtquellen-Gruppen vorgesehen sind, wobei vorzugsweise eine Lichtquellen-Gruppen rotes Licht, eine Lichtquellen-Gruppen grünes Licht und eine Lichtquellen-Gruppen blaues Licht emittiert.

Die eingangs gestellten Aufgaben werden weiters mit einer Beleuchtungsvorrichtung für einen Fahrzeugscheinwerfer gelöst, welche zumindest ein, vorzugsweise zwei oder mehr Mikroprojektions-Lichtmodule wie oben beschrieben umfasst.

Bei einer bevorzugten Ausführungsform kann es vorgesehen sein, dass zwei oder mehr Gruppen von Mikroprojektions-Lichtmodulen vorgesehen sind, und wobei jede Gruppe ein, zwei oder mehrere Mikroprojektions-Lichtmodule umfasst, wobei Mikroprojektions-Lichtmodule einer Gruppe dieselbe Lichtverteilung erzeugen, und wobei Mikroprojektions-Lichtmodule aus unterschiedlichen Gruppen unterschiedliche Lichtverteilungen erzeugen, wobei die Lichtquellen jeder Gruppe von Mikroprojektions-Lichtmodulen unabhängig von den Lichtquellen der anderen Gruppen ansteuerbar sind.

Dabei kann es vorteilhaft sein, wenn die Projektionseinrichtungen von Mikroprojektions-Lichtmodulen einer Gruppe ein gemeinsames Bauteil bilden.

Ein besonderer Vorteil entsteht aber, wenn die Projektionseinrichtungen aller Mikroprojektions-Lichtmodule ein gemeinsames Bauteil bilden.

Obendrein kann es zweckmäßig sein, wenn zwei oder mehr Gruppen zur Erzeugung unterschiedlicher Lichtverteilung vorgesehen sind, wobei jede Gruppen eine unterschiedliche Lichtverteilung bildet, die aus einer der folgenden Lichtverteilungen gewählt ist:
*) Abbiegelicht-Lichtverteilung;
*) Stadtlicht-Lichtverteilung;
*) Landstraßenlicht-Lichtverteilung;
*) Autobahnlicht-Lichtverteilung;
*) Lichtverteilung für Zusatzlicht für Autobahnlicht;
*) Kurvenlicht-Lichtverteilung;
*) Abblendlicht-Lichtverteilung;
*) Abblendlicht-Vorfeld-Lichtverteilung;
*) Lichtverteilung für asymmetrisches Abblendlicht im Fernfeld;
*) Lichtverteilung für asymmetrisches Abblendlicht im Fernfeld im Kurvenlichtmodus;
*) Fernlicht-Lichtverteilung;
*) Blendfreies Fernlicht-Lichtverteilung.

Nicht ausschließlich nur, aber insbesondere bei der Verwendung von Laser-Lichtquellen hat es sich auch noch als günstig herausgestellt, wenn die Beleuchtungsvorrichtung zwei oder mehr Mikroprojektions-Lichtmodule umfasst, wobei jedes Mikroprojektions-Lichtmodul zumindest eine Lichtquellen-Gruppe aufweist, wobei jede Lichtquellen-Gruppe zumindest eine Lichtquelle umfasst, und wobei Lichtquellen einer Lichtquellen-Gruppe Licht derselben Farbe emittieren, und wobei zumindest zwei Lichtquellen-Gruppen vorgesehen sind, welche Licht unterschiedlicher Farbe emittieren, und wobei jede Lichtquellen-Gruppe einen eigens dieser Lichtquellen-Gruppen zugeordneten Bereich der zumindest einen Projektionseinrichtung ihres Mikroprojektions-Lichtmoduls beleuchten, und wobei die unterschiedlichen Bereiche identisch ausgebildet bzw. zur Erzeugung identischer Lichtverteilungen ausgebildet sind.

Eine besonders vorteilhafte Ausführungsform ergibt sich, drei Gruppen von Lichtquellen-Gruppen vorgesehen sind, wobei vorzugsweise eine Gruppe an Lichtquellen-Gruppen rotes Licht, eine Gruppe an Lichtquellen-Gruppen grünes Licht und eine Gruppe an Lichtquellen-Gruppen blaues Licht emittiert, und wobei jede Gruppe von Lichtquellen-Gruppen zumindest eine Lichtquellen-Gruppe umfasst.

Im Folgenden ist die Erfindung anhand beispielhafter nicht einschränkender Ausführungsformen näher erörtert, die in einer Zeichnung veranschaulicht sind. In dieser zeigt
Fig. 1 eine schematische Darstellung eines Mikroprojektions-Lichtmoduls nach dem Stand der Technik in einer Explosionsdarstellung,
Fig. 2 eine schematische Darstellung eines erfindungsgemäßen Mikroprojektions-Lichtmoduls in einer Seitenansicht,
Fig. 2a eine Weiterbildung des Mikroprojektions-Lichtmoduls der Fig. 2 in einer Seitenansicht,
Fig. 2b einen Schnitt durch das Mikroprojektions-Lichtmodul der Figur 2a entlang der Linie B'-B',
Fig. 2c eine schematische Darstellung eines Mikro-Optiksystems eines erfindungsgemäßen Mikroprojektions-Lichtmoduls in einer perspektivischen Ansicht sowie eine vertikale Schnittebene,
Fig. 2d einen Schnitt durch das Mikro-Optiksystem der Figur 2c entlang der Ebene A-A,
Fig. 2e das Mikro-Optiksystem der Figur 2c, mit einer horizontalen Schnittebene,
Fig. 2f einen Schnitt durch das Mikro-Optiksystem der Figur 2e entlang der Ebene B-B,
Fig. 3 eine schematische Darstellung einer ersten Blendenvorrichtung mit einer, zwei oder mehr Blenden,
Fig. 3a eine schematische Darstellung einer Gesamtlichtverteilung mit Abbildungsfehlern, erzeugt mit einem Lichtmodul mit der ersten Blendenvorrichtung der Figur 3,
Fig. 3b die Teil-Lichtverteilungen mit Abbildungsfehlern, erzeugt mit den einzelnen Blenden der ersten Blendenvorrichtung der Figur 3, welche gemeinsam die Gesamtlichtverteilung der Figur 3a bilden,
Fig. 4 eine erste Variante einer zweiten Blendenvorrichtung,
Fig. 4a die Teil-Lichtverteilungen ohne Abbildungsfehler, erzeugt mit den einzelnen Blenden der zweiten Blendenvorrichtung der Figur 4,
Fig. 5 eine zweite Variante der zweiten Blendenvorrichtung,
Fig. 5a die Teil-Lichtverteilungen ohne Abbildungsfehler, erzeugt mit den einzelnen Blenden der zweiten Blendenvorrichtung der Figur 5,
Fig. 6a ein vier Mikro-Optiksysteme umfassender Ausschnitt eines erfindungsgemäßen Mikroprojektions-Lichtmoduls, wobei jedes Mikro-Optiksystem dreiteilig ausgebildet ist,
Fig. 6b ein vier Mikro-Optiksysteme umfassender Ausschnitt eines erfindungsgemäßen Mikroprojektions-Lichtmoduls, wobei jedes Mikro-Optiksystem vierteilig ausgebildet ist,
Fig. 7 ein Mikroprojektions-Lichtmodul mit einem Aktuator zum Verschieben der Austrittsoptik in vertikaler Richtung,
Fig. 8 ein Mikroprojektions-Lichtmodul mit einem Aktuator zum Verschieben der Austrittsoptik in horizontaler Richtung,
Fig. 9 ein Mikroprojektions-Lichtmodul mit einem Aktuator zum Verschieben der Austrittsoptik in vertikaler Richtung und einem Aktuator zum Verschieben der Austrittsoptik in horizontaler Richtung,
Fig. 10a eine schematische Lichtverteilung,
Fig. 10b die Auswirkungen eines Verschiebens der Austrittsoptik vertikal nach unten auf die Lichtverteilung aus Fig. 10a,
Fig. 10c die Auswirkungen eines Verschiebens der Austrittsoptik vertikal nach oben auf die Lichtverteilung aus Fig. 10a,
Fig. 11a eine Teillichtverteilung, erzeugt mit einem erfindungsgemäßen Lichtmodul oder einer oder mehreren Mikro-Optik-Systemen eines solchen Lichtmoduls,
Fig. 11b die Auswirkungen eines Verschiebens der Austrittsoptik horizontal nach links auf die Teillichtverteilung aus Fig. 11a,
Fig. 11c die Auswirkungen eines noch weiteren Verschiebens der Austrittsoptik horizontal nach links auf die Teillichtverteilung aus Fig. 11a,
Fig. 12 eine schematische Darstellung einer Beleuchtungsvorrichtung, aufgebaut aus einer Mehrzahl an erfindungsgemäßen Mikroprojektions-Lichtmodulen,
Fig. 13a - 13c unterschiedliche Varianten von Mikro-Optiksystemen, und
Fig. 14a und Fig. 14b eine schematische Anordnung zur Erzeugung einer weißen Gesamtlichtverteilung unter Verwendung von Lichtquellen unterschiedlicher Farben.

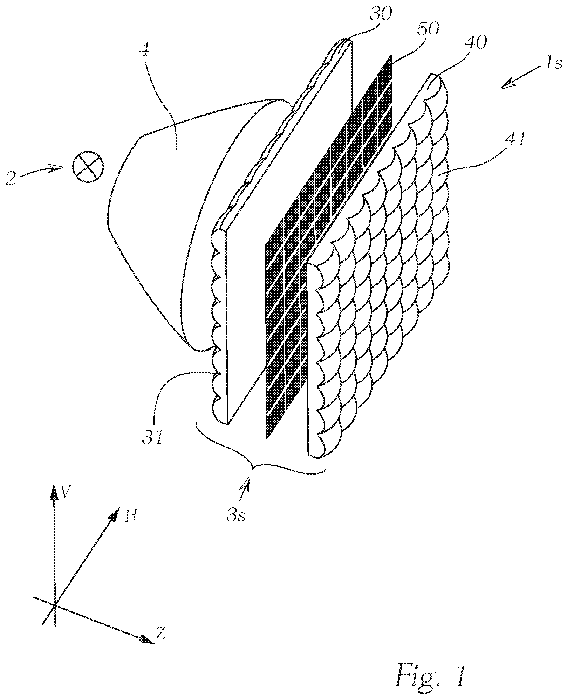

Figur 1 zeigt schematisch ein Mikroprojektions-Lichtmodul 1s für einen Fahrzeugscheinwerfer nach dem Stand der Technik. Das Mikroprojektions-Lichtmodul 1s weist eine Lichtquelle 2 sowie eine Projektionseinrichtung 3s auf, welche das von der Lichtquelle 2 austretende Licht in einen Bereich vor dem Kraftfahrzeug in Form von zumindest einer Lichtverteilung abbildet. Die dargestellten Koordinaten bezeichnen die Lichtaustrittsrichtung Z, die horizontale Richtung H, welche normal auf Z und normal auf die vertikale Richtung V steht. Dabei beziehen sich die Begriffe "horizontal" und "vertikal" auf den in einen im Fahrzeug verbauten Fahrzeugscheinwerfer eingebauten Zustand des Mikroprojektions-Lichtmoduls.

Bei der Lichtquelle 2 handelt es sich vorzugsweise um eine halbleiterbasierte Lichtquelle, welche beispielsweise eine, zwei oder mehr LEDs und/oder Laserdioden aufweist.

Die Lichtquelle 2 strahlt ihr Licht in eine Vorsatzoptikeinrichtung 4, beispielsweise einen Kollimator ein, welche das Licht der Lichtquelle 2 im Wesentlichen parallel richtet, bevor es auf die Projektionseinrichtung 3s auftrifft.

Diese Projektionseinrichtung 3s umfasst, wie in Figur 1 dargestellt, eine Eintrittsoptik 30, welche ein Array an Mikro-Eintrittsoptiken 31 aufweist, sowie eine Austrittsoptik 40, welche ein Array an Mikro-Austrittsoptiken 41 aufweist, wobei jeder Mikro-Eintrittsoptik 31 genau eine Mikro-Austrittsoptik 41 zugeordnet ist.

Die Mikro-Eintrittsoptiken 31 bei einem Lichtmodul gemäß Figur 1 sind dabei derart ausgebildet und/oder sind die Mikro-Eintrittsoptiken 31 und die Mikro-Austrittsoptiken 41 derart zueinander angeordnet, dass das aus einer Mikro-Eintrittsoptik 31 austretende Licht genau nur in die zugeordnete Mikro-Austrittsoptik 41 eintritt, und wobei das von den Mikro-Eintrittsoptiken 31 vorgeformte Licht von den Mikro-Austrittsoptiken 41 in einen Bereich vor dem Kraftfahrzeug als zumindest eine Lichtverteilung abgebildet wird.

Weiters ist eine erste Blendenvorrichtung 50 zwischen der Eintrittsoptik 30 und der Austrittsoptik 40 angeordnet. Mit der ersten Blendenvorrichtung 50 kann, wie dies weiter unten noch eingehender erörtert wird, der durch die Projektionseinrichtung durchtretende Lichtstrom beschnitten werden, um eine oder mehrere Lichtverteilungen mit definierten Formen, beispielsweise mit einer oder mehreren Hell-Dunkel-Grenzen, erzeugen zu können. Der Vollständigkeit halber sei hier noch angemerkt, dass die Darstellung in der Figur 1 mit der im Wesentlichen dunklen ersten Blendenvorrichtung 50 über die Ausgestaltung der Blendenvorrichtung 50 keine Aussagen trifft. Die Darstellung ist rein schematisch und soll lediglich das Vorhandensein einer ersten Blendenvorrichtung 50 sowie ihre ungefähre Position zeigen.

Die Eintrittsoptik 30 ist ein einziger Bauteil, welcher von den Mikro-Eintrittsoptiken 31 gebildet ist und von der Vorsatzoptikeinrichtung 4 getrennt ausgebildet ist. Die Mikro-Eintrittsoptiken 31 liegen dabei unmittelbar, vorzugsweise ohne Abstand aneinander an und bilden einen Array, wie oben erwähnt und in der Figur 1 gezeigt ist.

Ebenso gilt, dass die Austrittsoptik 40 ein einziger Bauteil ist, welcher von den Mikro-Austrittsoptiken 41 gebildet ist. Die Mikro-Austrittsoptiken 41 liegen dabei unmittelbar, vorzugsweise ohne Abstand aneinander an und bilden einen Array wie oben erwähnt und in der Figur 1 gezeigt ist.

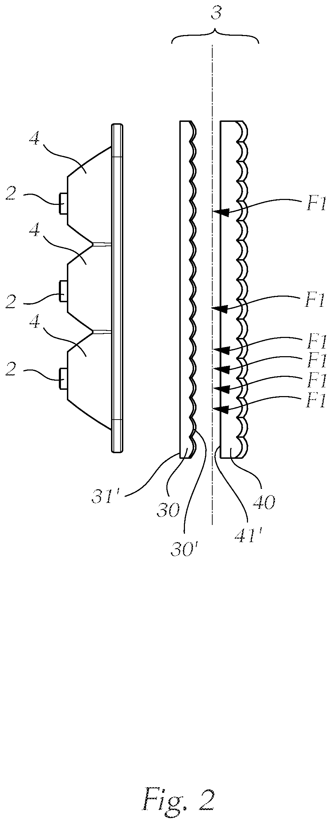

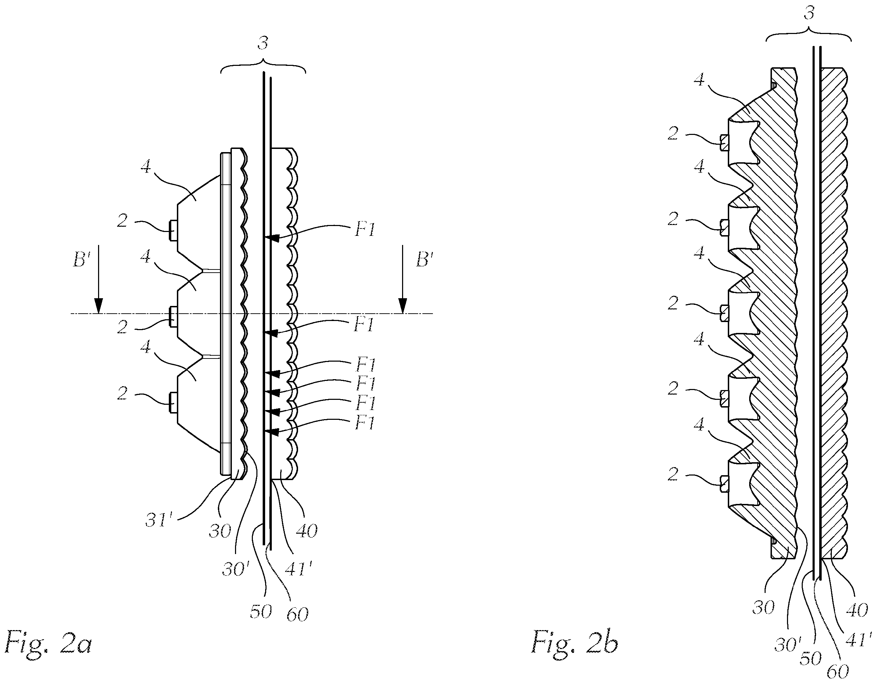

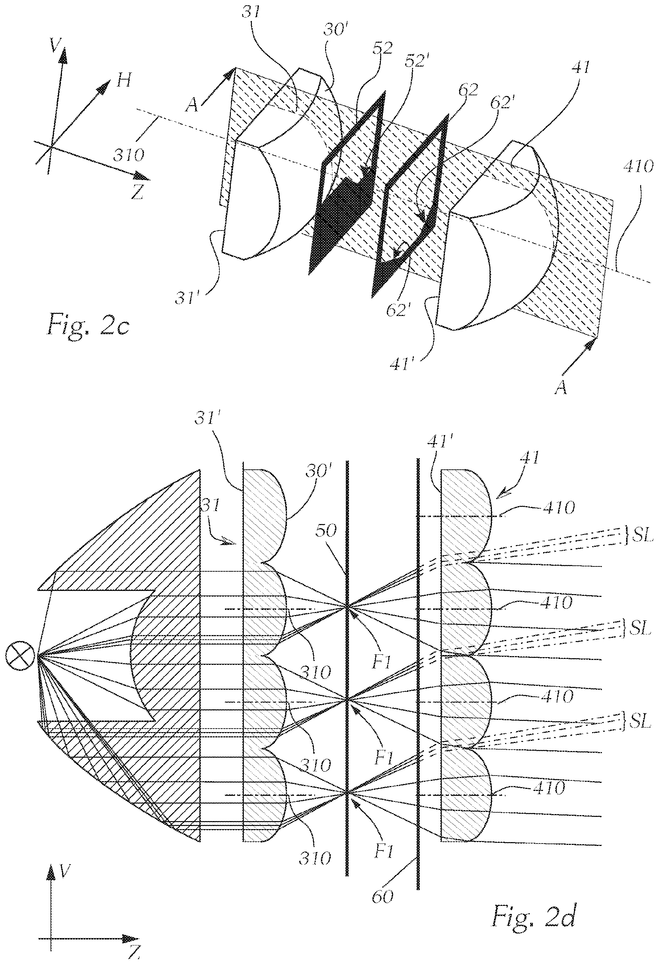

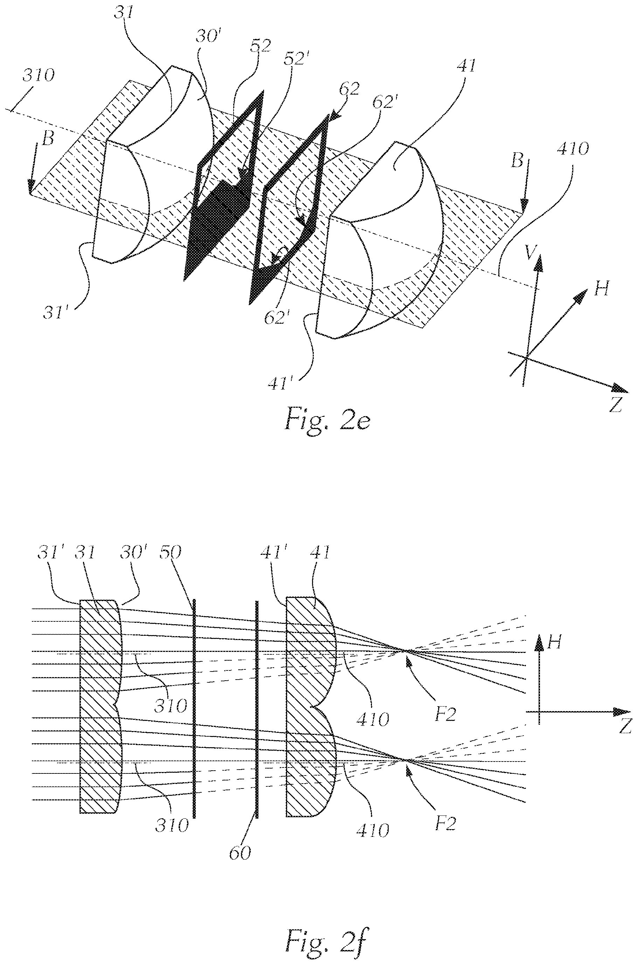

Nun wird auf die Fig. 2 Bezug genommen, die die wesentlichen Komponenten eines erfindungsgemäßen Mikroprojektions-Lichtmoduls 1 und ihren Zusammenhang in einer Seitenansicht schematisch darstellt. Mikroprojektions-Lichtmodul 1 umfasst eine Lichtquelle 2 sowie eine Projektionseinrichtung 3, welche das von der Lichtquelle 2 austretende Licht in einen Bereich vor dem Kraftfahrzeug in Form von zumindest einer Lichtverteilung abbildet.

Bei der Lichtquelle 2 handelt es sich nach wie vor vorzugsweise um eine halbleiterbasierte Lichtquelle, welche beispielsweise eine, zwei oder mehr LEDs und/oder Laserdioden aufweist.

Die Lichtquelle 2 strahlt ihr Licht nach wie vor in eine Vorsatzoptikeinrichtung 4, beispielsweise einen Kollimator ein, welche das Licht der Lichtquelle 2 im Wesentlichen parallel richtet, bevor es auf die Projektionseinrichtung 3 auftrifft.

Diese Projektionseinrichtung 3 umfasst, nach wie vor, eine Eintrittsoptik 30, welche aus einem Array an Mikro-Eintrittsoptiken 31 besteht, sowie eine Austrittsoptik 40, welche aus einem Array an Mikro-Austrittsoptiken 41 besteht, wobei jeder Mikro-Eintrittsoptik 31 genau eine Mikro-Austrittsoptik 41 zugeordnet ist. Im Unterschied zu der herkömmlichen in Fig. 1 dargestellten Projektionseinrichtung 3s, weist die Eintrittsoptik 30 der Projektionseinrichtung 3 der Fig. 2 zumindest eine plane Grenzfläche 31' auf, wobei die plane Grenzfläche 31' der Vorsatzoptikeinrichtung 4, die vorzugsweise als ein Kollimator ausgebildet ist, zugewandt ist. Es sei an dieser Stelle angemerkt, dass die Eintrittsoptik 30 in einer weiteren Weiterbildung der Erfindung mit der Vorsatzoptikeinrichtung 4 einstückig ausgebildet (Fig. 2a und 2b) oder mit der Vorsatzoptikeinrichtung 4 fest verbunden ist. Das aus der Vorsatzoptikeinrichtung 4 austretende Licht trifft auf die zumindest eine plane Grenzfläche 31' auf und bestrahlt dabei vorzugsweise die ganze plane Grenzfläche 31'.

Darüber hinaus sind die Mikro-Eintrittsoptiken 31 bei einem Mikroprojektions-Lichtmodul 1 gemäß Figur 2 derart ausgebildet und/oder sind die Mikro-Eintrittsoptiken 31 und die Mikro-Austrittsoptiken 41 derart zueinander angeordnet, dass das aus einer Mikro-Eintrittsoptik 31 austretende Licht genau nur in die zugeordnete Mikro-Austrittsoptik 41 eintritt, und wobei das von den Mikro-Eintrittsoptiken 31 vorgeformte Licht von den Mikro-Austrittsoptiken 41 in einen Bereich vor dem Kraftfahrzeug als zumindest eine Lichtverteilung abgebildet wird.

Bei einer Weiterbildung der vorliegenden Erfindung kann, wie es in Fig. 2a veranschaulicht ist, eine erste Blendenvorrichtung 50 und/oder eine zweite Blendenvorrichtung 60 vorgesehen sein, welche zwischen der Eintrittsoptik 30 und der aus den Mikro-Austrittsoptiken 41 gebildeten Austrittsoptik 40 angeordnet sind, wobei die erste Blendenvorrichtung 50 vorzugsweise zwischen der Eintrittsoptik 30 und der zweiten Blendenvorrichtung 60 angeordnet ist. Dabei kann mit der ersten Blendenvorrichtung 50 kann, wie oben bereits erwähnt, der durch die Projektionseinrichtung 3 durchtretende Lichtstrom beschnitten werden, um eine oder mehrere Lichtverteilungen mit definierten Formen, beispielsweise mit einer oder mehreren Hell-Dunkel-Grenzen, erzeugen zu können. Durch die zweite Blendenvorrichtung 60 kann, wie unten noch eingehender erörtert wird, die beispielsweise unter Verwendung der Blendenvorrichtung 50 erzeugte Lichtverteilung weitgehend korrigiert werden. Es können beispielsweise die oben erwähnten Farbfehler (Farblängs- und/oder Farbquerfehler), die zu einer Verfärbung der Hell-Dunkel-Grenze führen können und vom menschlichen Auge als unangenehm und störend empfunden werden, im Lichtbild reduziert werden.

Obendrein ist vorgesehen, dass die Eintrittsoptik 30 mit der Vorsatzoptikeinrichtung 4 einstückig ausgebildet bzw. fest verbunden und die Austrittsoptik 40 mit der zweiten Blendenvorrichtung 60 einstückig ausgebildet bzw. fest verbunden sind. Dies zeigt die Fig. 2b. Dabei ist es durchaus denkbar, dass die Projektionseinrichtung keine zweite optionale Blendenvorrichtung 60 umfasst, in welchem Fall die Austrittsoptik mit der ersten Blendenvorrichtung 50 einstückig ausgebildet bzw. fest verbunden sein kann.

Figuren 2c und 2e zeigen ein Mikro-Optiksystem bestehend aus einer Mikro-Eintrittsoptik 31 und einer zugeordneten Mikro-Austrittsoptik 41 in Explosionsdarstellung, wobei die Mikro-Eintrittsoptik 31 eine gekrümmte Grenzfläche 30' aufweist, welche gekrümmte Grenzfläche 30' der Mikro-Austrittsoptik 41 zugewandt ist. Dabei ist die Krümmung der Grenzfläche 30' derart ausgebildet, dass die gekrümmte Grenzfläche 30' in die Lichtausbreitungsrichtung gewölbt ist, wie die Figuren 2c bis 2f zeigen. Weiters zeigen die Figuren 2c und 2e einen Teil der ersten Blendenvorrichtung 50 und der zweiten Blendenvorrichtung 60 im Bereich zwischen den beiden Mikro-Optiken 31, 41.

Betrachtet man das Mikro-Optiksystem aus den Figuren 2d und 2f, so erkennt man in Figur 2d, dass die Mikro-Eintrittsoptik 31 das durch sie durchtretende Licht in vertikaler Richtung in einen Mikro-Optik-Brennpunkt F1 fokussiert, wobei der Mikro-Optik-Brennpunkt F1 vorzugsweise mit dem Brennpunkt des aus Mikro-Eintrittsoptik 31 und der Mikro-Austrittsoptik 41 bestehenden Mikro-Optiksystems zusammenfällt. Figur 2d zeigt also aus der Vorsatzoptikeinrichtung 4 austretende vorzugsweise parallel zueinander gerichtete Lichtstrahlen, welche in einer vertikalen Ebene (nämlich der Ebene A-A aus Figur 2c) liegen bzw. die Projektion von Lichtstrahlen in diese Ebene A-A.

Die aus der Vorsatzoptikeinrichtung 4 parallel austretenden Lichtstrahlen werden also von der Mikro-Eintrittsoptik 31 in den Mikro-Optik-Brennpunkt F1 fokussiert, welcher in Lichtaustrittsrichtung gesehen vor der zugeordneten Mikro-Austrittsoptik 41 liegt.

Wie dies eingangs schon erwähnt wurde, soll hier der Vollständigkeit halber nochmals angemerkt werden, dass der einfacheren Formulierung halber hier und generell im Rahmen dieser gesamten Offenbarung an anderen Stellen von einer Fokussierung "in einen Brennpunkt" gesprochen wird. Tatsächlich, d.h. in der Realität werden dabei allerdings die Lichtstrahlen nicht in einem einzelnen Brennpunkt fokussiert sondern werden in eine Brennfläche abgebildet, welche den besagten Brennpunkt enthält. Diese Brennfläche kann eine Brennebene sein, in der Regel ist diese Brennfläche aber in Folge von Abbildungsfehlern (Aberrationen) und Korrekturen höherer Ordnungen, welche Korrekturen bei der Betrachtung der Lichtausbreitung von Lichtstrahlen, welche einen großen Winkel zur optischen Achse bilden, neben der paraxialen Näherung zu berücksichtigen sind, nicht eben sondern kann auch gekrümmt "ausgebildet" sein, d.h. die Lichtstrahlen werden in eine gekrümmte Fläche, welche den Brennpunkt enthält, abgebildet. Dabei führt die Krümmung der Brennfläche zu Fehlern bei der erzeugten Lichtverteilung (siehe Fig. 3a und Fig. 3b).

Jedes Mikro-Optiksystem verfügt somit über einen Brennpunkt F1, welcher zwischen Eintrittsoptik 30 und Austrittsoptik 40 liegt, und in welchen Licht der zugehörigen Mikro-Eintrittsoptik 31 vorzugsweise fokussiert wird.

Darüber hinaus weist die Mikro-Austrittsoptik 41 einen Brennpunkt auf, welcher Brennpunkt mit dem Mikro-Optik-Brennpunkt F1 und mit dem Brennpunkt der der Mikro-Austrittsoptik 41 zugehörigen Mikro-Eintrittsoptik 31 vorzugsweise zusammenfällt. Licht wird also in den Brennpunkt F1 fokussiert und anschließend beim Durchtritt durch die zugehörige Mikro-Austrittsoptik 41 entsprechend in der vertikalen Richtung kollimiert und in einen Bereich vor dem Fahrzeug projiziert, wie dies in Figur 2d schematisch dargestellt ist.

Figur 2f zeigt weiters das Verhalten in horizontaler Richtung H, d.h. es werden Strahlen betrachtet, die in einer horizontalen Ebene, etwa in der Ebene B-B aus Figur 2e liegen bzw. die Projektion von Strahlen in diese Ebene. Wie in Figur 2f zu erkennen ist, weitet jedes Mikro-Optiksystem bestehend aus Mikro-Eintrittsoptik 31 und Mikro-Austrittsoptik 41 das durch sie durchtretende Licht in horizontaler Richtung auf. Dazu fokussiert jedes Mikro-Optiksystem das durch es durchtretende Licht in horizontaler Richtung auf einen Brennpunkt, welcher hinter (in Lichtausbreitungsrichtung) der Mikro-Austrittsoptik 41 liegt. Dieser Brennpunkt fällt vorzugsweise mit dem Brennpunkt F2 der korrespondierenden Mikro-Austrittsoptik 41 zusammen. In horizontaler Richtung wird das Licht also aufgeweitet, um die gewünschte Breite der Teillichtverteilungen der einzelnen Mikro-Optiksysteme zu erreichen.

Es sei an dieser Stelle noch einmal vermerkt, dass hier ein idealisiertes optisches System beschrieben ist; in der Praxis werden häufig sowohl erste als auch zweite Optik eines Mikro-Optiksystems als Freiform ausgeführt, wodurch sich eine Abbildung wie oben beschrieben in eine Brennfläche ergibt. Darüber hinaus wird zumindest ein Teil SL des Lichts aus einem Mikro-Optiksystem zwischen der Mikro-Eintrittsoptik 31 und der zugehörenden Mikro-Austrittsoptik austreten und in ein mit dem einen Mikro-Optiksystem benachbarten Mikro-Optiksystem gestreut (Fig. 2d). Es kommt also zu einem so genannten Übersprechen zwischen den Mikro-Optiksystemen, wodurch eine fehlerhafte Lichtverteilung (siehe 3a, 3b) erzeugt wird. Dabei kann die optional vorgesehene zweite Blendenvorrichtung 60 als eine Aperturblende fungieren, die die unerwünschten das Übersprechen verursachende Teile SL des Lichts blockieren und dadurch bewirken, dass das Licht aus der gezeigten Mikro-Eintrittsoptik 31 ausschließlich in die zugeordnete Mikro-Austrittsoptik 41 gelangt. Ein wesentliches Merkmal der oben beschriebenen Mikro-Optiksysteme liegt darin, dass diese in der Horizontalen das durch sie durchtretende Licht aufweiten.

Die Mikro-Eintrittsoptiken 31 sind entsprechend vorzugsweise als Sammeloptiken ausgebildet, welche Licht in vertikaler und horizontaler Richtung sammeln. Dabei können die Mikro-Eintrittsoptiken 31 z.B. als Freiform-Optiken ausgebildet sein.

Bezugnehmend auf die gekrümmten Grenzflächen 30' der Mikro-Eintrittsoptiken 31 ist obendrein anzumerken, dass die Krümmung jeder gekrümmten Grenzfläche 30' einen Krümmungsradius-Minimalwert aufweist, d.h. diesen nicht unterschreiten soll. Dadurch werden, wie oben bereits erläutert, Totalreflexionen und folglich zusätzliche Lichtverlusten reduziert bzw. vermieden.

Dabei können die Mikro-Eintrittsoptiken 31 verschiedene Krümmungsradius-Minimalwerte aufweisen. Darüber hinaus, wie beispielsweise Figuren 2d und 2f zu entnehmen ist, weisen die Grenzflächen 30' einer Mikro-Eintrittsoptik 31 verschiedene Krümmungen in horizontaler und in vertikaler Richtung auf, wobei vorzugsweise der Krümmungsradius der Grenzfläche 30' in vertikaler Richtung V (Fig. 2d) kleiner als der Krümmungsradius der Grenzfläche 30' in horizontaler Richtung H (Fig. 2f). Dies hat beispielsweise zu Folge, dass jede Mikro-Eintrittsoptik das durch sie durchtretende Licht in horizontaler Richtung H schwächer als in vertikaler Richtung V fokussiert.

Des Weiteren ist es durchaus denkbar, dass die von den Mikro-Eintrittsoptiken 31 abgewandten Grenzflächen der Mikro-Austrittsoptiken unterschiedlich gekrümmt sein können.

Die Mikro-Austrittsoptiken 41 sind üblicherweise als Projektionsoptiken ausgebildet, z.B. als sphärische oder asphärische Linsen. Es kann auch vorgesehen sein, dass die Mikro-Austrittsoptiken 41 als Freiform-Linsen ausgebildet sind.

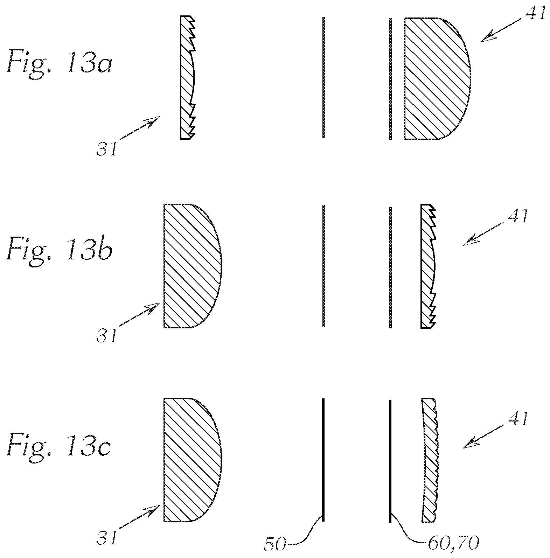

An dieser Stelle soll kurz auf die Figuren 13a bis 13c verwiesen werden: oben und in der weiteren Beschreibung wird davon ausgegangen, dass jede Mikro-Eintrittsoptik 31 und jede Mikro-Austrittsoptik 41 jeweils aus einer einzigen Linse gebildet sind. Es kann aber auch vorgesehen sein, dass entweder die Mikro-Eintrittsoptiken 31 und/oder die Mikro-Austrittsoptiken 41 selbst noch einmal jeweils aus einer, zwei oder mehr von "Optiken" bzw. optischen Elementen bestehen. Jedes dieser "Mikro-Mikro-Optikelemente" einer Mikro-Optik muss dazu dieselbe Brennebene aufweisen. Beispielsweise kann eine oder können beide Mikro-Optiken Fresnel-Linsen sein, welche unterschiedliche, optisch wirksame Bereiche aufweisen. Jeder der optischen Bereiche (Mikro-Mikro-Optik) einer Mikro-Eintrittsoptik kann, muss aber nicht in jede Mikro-Mikro-Austrittsoptik Licht abstrahlen.

Weiters, wie Figuren 2a bzw. 2c zu entnehmen ist, sind die voneinander abgewandten Grenzflächen 31', 41' voneinander zugeordneten Mikro-Eintrittsoptiken 31 und Mikro-Austrittsoptiken 41 kongruent zueinander, vorzugsweise plan, ausgebildet und vorzugsweise auch kongruent zueinander angeordnet.

In dem gezeigten Beispiel sind die Flächen 31', 41' quadratisch ausgebildet, allerdings sind andere Formen, z.B. rechteckige oder hexagonale Flächen, durchaus denkbar.

Die optischen Achsen 310, 410 (Figuren 2c, 2e) von einander zugeordneten Mikro-Eintrittsoptiken 31 und Mikro-Austrittsoptiken 41 verlaufen günstiger Weise parallel zueinander, wobei es insbesondere von Vorteil hinsichtlich der Justierung der gesamten Projektionseinrichtung 3 ist, wenn die optischen Achsen 310, 410 zusammenfallen.

Die erste Blendenvorrichtung 50 liegt vorzugsweise in einer Ebene, welche von den Mikro-Optik-Brennpunkten F1 aufgespannt ist. Vorzugsweise weist dabei die Blendenvorrichtung 50 für jedes Mikro-Optiksystem (siehe Figur 2c, 2e) jeweils eine Blende auf, wobei die Blende eine oder mehrere optisch wirksame Blendenkanten aufweist.

Die zweite Blendenvorrichtung 60 liegt zwischen der ersten Blendenvorrichtung 50 und der Austrittsoptik 40. Vorzugsweise weist dabei die zweite Blendenvorrichtung 60 für jedes Mikro-Optiksystem (siehe Figur 2c, 2e) jeweils eine Blende auf, wobei die Blende eine oder mehrere optisch wirksame Blendenkanten aufweist und dazu dient das Streulicht SL (Fig. 2d) nicht durch zu lassen.

Die Figuren 2c, 2e zeigen dabei ein Mikro-Optiksystem, welchem eine erste Blende 52 mit einer optisch wirksamen Blendenkante 52' und eine zweite Blende 62 mit einer weiteren optisch wirksamen Kante 62' zugeordnet ist. Das durch dieses System durchtretende Licht wird zunächst entsprechend der ersten Blendenkante 52' beschnitten und die Blendenkante 52' wird im Lichtbild als Hell-Dunkel-Grenze abgebildet. Des Weiteren wird das Licht entsprechend der zweiten Blendenkante 62' dergestalt beschnitten, dass kein Übersprechen zwischen den einzelnen Mikro-Optiksystemen stattfindet und die durch die Krümmung der Brennfläche entstandenen Abbildungsfehler Y1, Y2 der Lichtverteilung GLV (siehe Fig. 3a, 3b) behoben sind.

Die erste Blendenvorrichtung 50 und die zweite Blendenvorrichtung 60 weisen also für zumindest ein Paar von einander zugeordneten Mikro-Eintritts- und Mikro-Austrittsoptiken 31, 41 eine Blende auf. Vorzugsweise weisen die erste Blendenvorrichtung 50 und die zweite Blendenvorrichtung 60 allerdings für mehrere Paare, und insbesondere für alle Paare eine Blende 51, 52, 53, 54, 55, 61, 62, 63, 64, 65 mit jeweils zumindest einer, beispielsweise genau einer optisch wirksamen Blendenkante 51', 52', 53', 54', 55', 61', 62', 63', 64', 65' (Fig. 3 und Fig. 4) auf.

Die erste, aus dem Stand der Technik bekannte Blendenvorrichtung 50 ist in Figur 3 schematisch dargestellt. Figur 3 zeigt diese erste Blendenvorrichtung 50 in einer Ansicht von Vorne, wobei die erste Blendenvorrichtung 50 fünf unterschiedliche Typen von Blenden 51 bis 55 aufweist. Jede dieser Blenden 51 bis 55 besteht aus einem Licht undurchlässigen Material 51", 52", 53", 54", 55", welches genau eine (wie dargestellt) oder mehrere (nicht dargestellt) lichtdurchlässige Durchbrüche 51'", 52'", 53'", 54'", 55'" aufweist, durch welche Licht durchtreten kann. Die Blendenkanten 51', 52', 53', 54', 55' der Blenden werden im jeweiligen Teil-Lichtbild als oben liegende Hell-Dunkel-Grenzen, welche das Lichtbild nach oben hin begrenzt, abgebildet. Es sei angemerkt, dass der Begriff "vorn" im Zusammenhang mit der vorliegenden Erfindung auf die Lichtaustrittsrichtung/Hauptabstrahlrichtung des Mikroprojektions-Lichtmoduls bezogen ist.

Jede dieser Blenden ist genau einem Mikro-Optiksystem zugeordnet, und wenn alle Mikro-Optiksysteme mit Licht bestrahlt werden, ergibt sich eine Gesamtlichtverteilung GLV, wie in Figur 3a schematisch dargestellt, als Überlagerung aller Teil-Lichtverteilungen. Bei der gezeigten Gesamtlichtverteilung GLV handelt es sich in dem gezeigten Beispiel um eine Abblendlichtverteilung mit asymmetrischer Hell-Dunkel-Grenze.

Figur 3b zeigt jeweils eine der Blenden 51 - 55 und links neben der Blende schematisch die jeweils damit erzeugte Teil-Lichtverteilung LV1 - LV5.

Dabei ist es klar erkennbar, dass durch die Abbildungsfehler und durch das Übersprechen zwischen benachbarten Mikro-Optik Systemen Abbildungsfehler-Teilbereiche X1, X2, X3, X4, X5, X6 in den Teil-Lichtverteilungen LV2, LV4, LV5 entstehen, deren Überlagerung zur Entstehung von Abbildungsfehler-Großbereichen Y1, Y2 in der Gesamtlichtverteilung GLV führt.

Fig. 4 zeigt eine zweite erfindungsgemäße Blendenvorrichtung 60, mit derer Hilfe Abbildungsfehler behoben werden. Dabei ist die zweite Blendenvorrichtung 60 in einer Ansicht von Vorne gezeigt. Es sind fünf unterschiedliche Typen von Blenden 61 bis 65 zu erkennen, die die zweite Blendenvorrichtung 60 aufweist. Jede dieser Blenden 61 bis 65 besteht aus einem Licht undurchlässigen Material 61", 62", 63", 64", 65", welches genau eine (wie dargestellt) oder mehrere (nicht dargestellt) lichtdurchlässige Durchbrüche 61"', 62"', 63'", 64'", 65'" aufweist, durch welche Licht durchtreten kann. Durch die Durchbrüche wird das mithilfe der ersten Blendenvorrichtung bereits beschnittene Lichtbild weiterhin derart beschnitten, dass keine Abbildungsfehler-Teilbereiche X1 bis X6, und infolgedessen auch keine Abbildungsfehler-Großbereiche Y1, Y2 bei den erzeugten Teil-Lichtverteilungen und Lichtverteilungen mehr vorhanden sind. Dies wird durch die Formung der Blendenkanten erreicht. Als besonders vorteilhaft hat sich dabei eine giebelförmige, aber im Allgemeinen von der Mitte nach außen hin schräg aufsteigende Form der unteren Blendenkante 62', 64', 65' der Blenden erwiesen. Diese werden im jeweiligen Teil-Lichtbild als oben liegende Hell-Dunkel-Grenzen, welche das Lichtbild nach oben hin begrenzt, abgebildet. Die Lichtundurchlässigen Bereiche 61" bis 65" sind dabei derart ausgebildet und dazu eingerichtet, dass kein Übersprechen zwischen den Mikro-Optiksystemen stattfindet, d.h. kein Streulicht SL (Teil SL des Lichts in Fig. 2d) aus einem Mikro-Optiksystem in das benachbarte Mikro-Optiksystem gelangt. Dadurch wird der Abbildungsfehler Y2 reduziert bzw. behoben.

Figur 4a zeigt jeweils eine der Blenden 61 bis 65 und links neben der Blende schematisch die jeweils damit erzeugte Teil-Lichtverteilung LV1' bis LV5' ohne Abbildungsfehler-Teilbereiche X1 bis X6.

Fig. 5 zeigt ein weiteres Ausführungsbeispiel der zweiten Blendenvorrichtung 70. Verglichen mit der zweiten Blendenvorrichtung 60 der Figuren 4 und 4a weist zumindest ein Teil der Blenden 73a bis 73d und 75a bis 75f der zweiten Blendenvorrichtung 70 der Fig. 5 jeweils einen lichtdurchlässigen Durchbruch 73a'" bis 73d'" und 75a'" bis 75f'" auf. Dabei sind die Blenden 73a bis 73d und 75a bis 75f derart angeordnet, dass das durch ihre Durchbrüche 73a'" bis 73d'" und 75a'" bis 75f'" durchtretende Licht Teil-Lichtverteilungen LV3" und LV5" (Fig. 5a) bildet, wobei die Teil-Lichtverteilungen LV3" und LV5" zu einem Bereich in der Mitte der Gesamtlichtverteilung, d.h. rund um das gewünschte Maximum der Beleuchtungsstärke der abgestrahlten Lichtverteilung, beitragen in welchem Bereich beispielsweise eine größere Beleuchtungsstärke benötigt wird.

Die in der Figur 5 dargestellte Ausführungsform der zweiten Blendenvorrichtung 70 ist besonders vorteilhaft, da z.B. das Verwenden der zweiten Blendenvorrichtung 60 gemäß Figur 4 anstatt der zweiten Blendenvorrichtung 70 gemäß Figur 5 dazu führen würde, dass der Großteil des Lichtstrom abgeschattet würde und deshalb beispielsweise gesetzlich vorgeschriebene Lichtstromwerte im HV-Punkt nicht erreicht würden. Der Grund dafür ist, dass das für die Erzeugung der Teil-Lichtverteilungen LV3 bis LV5 notwendige Licht stark in der Brennfläche bzw. Zwischenbildebene der Projektionseinrichtung fokussiert wird. Die weitere Strahlausbreitung erfolgt danach dergestalt, dass einige der Lichtstrahlen einen großen Winkel zur optischen Achse bilden können, sodass die Durchbrüche 73a'" bis 73d'" und 75a'" bis 75f'" der zweiten Blendenvorrichtung 70 sehr groß sein müssen, damit eine genügende Lichtmenge durchgelassen wird.

Auf diese, in Figuren 4, 4a, 5, 5a dargestellte Weise kann z.B. eine abbildungsfehlerfreie Abblendlichtverteilung mit einem erfindungsgemäßen Lichtmodul erzeugt werden, wobei zu der abbildungsfehlerfreien Abblendlichtverteilung einzelne Mikro-Optiksysteme jeweils einen definierten Beitrag in Form einer abbildungsfehlerfreien Teil-Lichtverteilung erzeugen.

Mit dieserart Lichtmodulen lassen sich darüber hinaus beliebige abbildungsfehlerfreie Gesamtlichtverteilungen erzeugen. Durch gruppenweises Anleuchten von Mikro-Optiksystemen mit der ersten und der zweiten Blende mit jeweils zumindest einer eigenen Lichtquelle können gezielt vorgegebene (und durch die Form der Blendenkante bestimmte) abbildungsfehlerfreie Teil-Lichtverteilungen aktiviert (oder ausgeblendet) werden, sodass sich z.B. eine dynamische Lichtverteilung erzeugen lässt.

Die Gestaltung der Eintrittsoptik(en) und der Austrittsoptik(en) lässt unter Umständen nur eine begrenzte Formung der Lichtverteilung zu. Durch die Verwendung von vorzugsweise standardisierten Blenden wie oben beschrieben lassen sich eine, zwei oder mehr Teil-Lichtverteilungen erzeugen, welche bei entsprechender Auswahl zu der gewünschten Gesamtlichtverteilung führen.

Die Blenden können z.B. auch als einzelne Blenden ausgeführt sein, welche die Blendenvorrichtungen "bilden", vorzugsweise handelt es sich aber wie gezeigt um Blendenvorrichtungs-Bauteile, etwa ebene Folien etc., in welchen entsprechende Öffnungen/Durchbrüche zum Durchtritt von Licht vorgesehen sind.

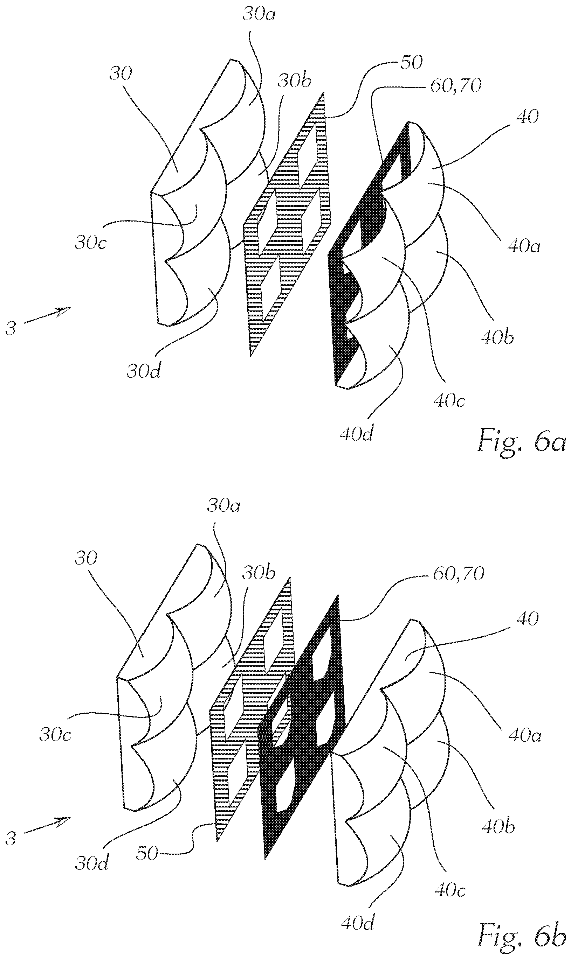

Figuren 6a und 6b zeigen einen Ausschnitt des erfindungsgemäßen Mikroprojektions-Lichtmoduls mit jeweils vier, in einem 2x2 Array angeordneten, Mikro-Optiksystemen. Zwischen den Mikro-Optiksystemen sind die erste und die zweite Blendenvorrichtung angeordnet. Dabei zeigt die Fig. 6a eine dreiteilige (zu beachten ist die einstückige Ausführung der zweiten Blendenvorrichtung 60, 70 mit der Austrittsoptik 40) und die Fig. 6b eine vierteilige (Eintrittsoptik 30, Austrittsoptik, die erste Blendenvorrichtung 50 und die zweite Blendenvorrichtung 60, 70 sind getrennt voneinander ausgebildet) Ausführungsform des Mikroprojektions-Lichtmoduls.

Bei einer Variante, die in Figur 6a gezeigt ist, ist vorgesehen, dass die Eintrittsoptik 30, die erste Blendenvorrichtung 50 und die mit der zweiten Blendenvorrichtung 60, 70 einstückig ausgebildete Austrittsoptik 40 getrennt voneinander ausgebildet und typischerweise auch in einem Abstand zueinander angeordnet sind. Dabei sind die Eintrittsoptik 30 als vier Mikro-Eintrittsoptiken 30a, 30b, 30c, 30d und die Austrittsoptik 40 als vier Mikro-Austrittsoptiken 40a, 40b, 40c, 40d ausgebildet. Die Anzahl der Mikro-Eintritts- und Mikro-Austrittsoptiken ist dabei nicht maßgebend. Jede Eintritts- und Austrittsoptik kann eine unterschiedliche Anzahl von Mikro-Optiken aufweisen (siehe auch Fig. 13c). Dabei können die Mikro-Eintrittsoptiken verschiedene Krümmungsradien ihrer den Mikro-Austrittsoptiken zugewandten Austrittsfläche aufweisen. Die Mikro-Austrittsoptiken ihrerseits können ebenfalls verschiedene Krümmungsradien ihrer den Mikro-Eintrittsoptiken abgewandten Austrittsfläche aufweisen.

Die zweite Blendenvorrichtung 60, 70 kann dabei durch Bedampfen einer der Grenzflächen 41' erzeugt werden, oder durch Aufbringen einer absorbierenden Schicht, welche anschließend gezielt z.B. mittels Laserstrahlen wieder abgetragen wird.

Es kann in diesem Fall aber auch vorgesehen sein, dass die zweite Blendenvorrichtung 60, 70 als von der Austrittsoptik 40 getrennt ausgebildetes Bauteil ausgebildet ist, wie dies in Figur 6b gezeigt ist. In diesem Fall kann die zweite Blendenvorrichtung 60, 70 in Form einer präzisen Maske z.B. aus Metall (Lochmaske, Strichmasken, Raster, etc.) eingefügt werden.

Die in Figuren 6a und 6b gezeigten Varianten können selbstverständlich kombiniert werden. Es kann z.B. aus Gründen der Einstellbarkeit der Projektionseinrichtung 3 (Abstände der Brennebenen, Orientierung der optischen Achse usw.) von Vorteil sein, die zweite Blendenvorrichtung 60, 70 gentrennt von der Austrittsoptik 40, die erste Blendenvorrichtung 50 aber einstückig mit der zweiten Blendenvorrichtung 60, 70 einstückig auszubilden. Vorteilhaft hinsichtlich der Schärfe des Lichtbildes ist, wenn die erste Blendenvorrichtung 50 in der durch die Brennpunkte der Mikro-Optiksysteme aufgespannten Fläche, welche die Brennfläche der Projektionseinrichtung 3 bildet, angeordnet ist. Dabei wird das Lichtbild durch die Form der ersten Blendenvorrichtung 50 bestimmt und durch die zweite Blendenvorrichtung 60, 70 korrigiert und in einen abbildungsfehlerfreien Zustand gebracht.

Erfindungsgemäß sind die Eintritts- und Austrittsoptik voneinander getrennt ausgebildet. Dabei ist ein Positionieraufwand der einzelnen Bauteile beim Zusammenbau notwendig, wobei von Vorteil ist, wenn die einzelnen Bauteile - wie weiter unten noch erläutert - relativ zueinander bewegt werden können.

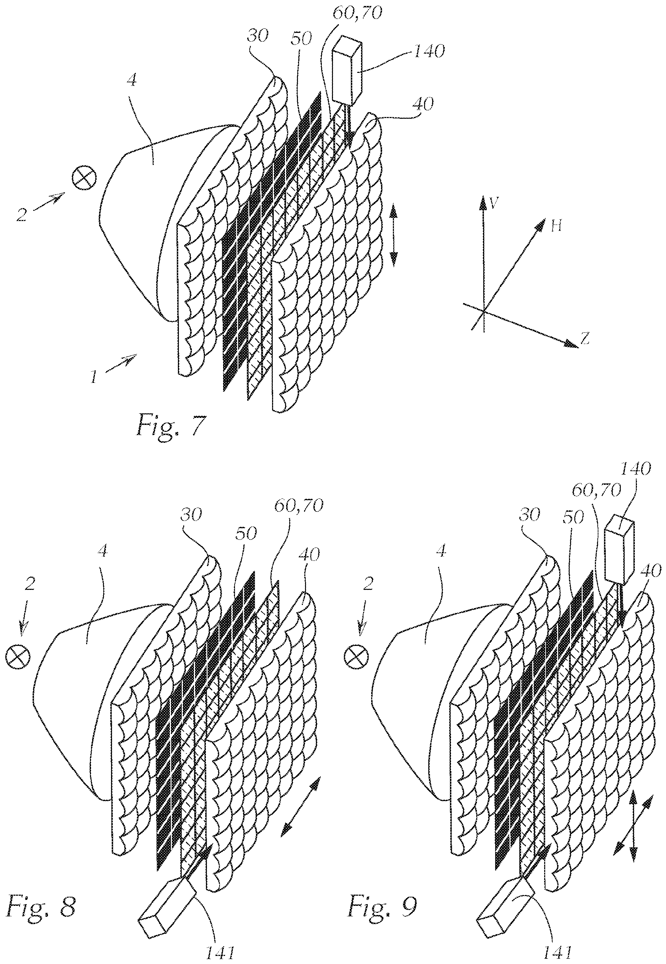

Die Figuren 7 - 9 zeigen Ausführungsformen bei welchen die Austrittsoptik 40 in Bezug auf die Eintrittsoptik 30 verschiebbar gelagert ist. Dabei sind die Vorsatzoptikeinrichtung 4, die Eintrittsoptik 30, die erste Blendenvorrichtung 50, die zweite Beleuchtungsvorrichtung 60, 70 und die Austrittsoptik 40 voneinander getrennt ausgebildet. Dabei aber sind angesichts des oben Gesagten die Ausführungsformen, bei den beispielsweise die Eintrittsoptik 30 mit der Vorsatzoptikeinrichtung 4 einstückig ausgebildet bzw. fest verbunden ist und/oder die zweite Blendenvorrichtung 60, 70 mit der Austrittsoptik 40 und/oder mit der ersten Blendenvorrichtung 50 einstückig ausgebildet bzw. fest verbunden ist, durchaus denkbar manchmal vorteilhaft. So bringt z.B., wie oben erwähnt, eine Weiterbildung der vorliegenden Erfindung, bei der die Vorsatzoptikeinrichtung 4 mit der Eintrittsoptik 30 einstückig ausgebildet bzw. fest verbunden ist, den Vorteil, dass Lichtverluste aufgrund Reflexionen und/oder Totalreflexionen durch Reduzierung der Grenzflächen zwischen den optisch relevanten Bauteilen reduziert werden.

Die Austrittsoptik 40 ist dabei - in Einbaulage des Mikroprojektions-Lichtmoduls 1 - in vertikaler (Figur 7), horizontaler (Figur 8) oder vertikaler und horizontaler (Figur 9) Richtung verschiebbar. Auf diese Weise lässt sich das Lichtbild in vertikaler und/oder horizontaler Richtung, z.B. zur Leuchtweitenregulierung und/oder zur Realisierung einer dynamischen Kurvenlichtfunktion verschieben.

Die Austrittsoptik 40 wird dabei vorzugsweise parallel zu der Eintrittsoptik 30, und/oder parallel zu der ersten Blendenvorrichtung 50, und/oder parallel zu der zweiten Blendenvorrichtung 60, 70 verschoben.

Zum Verschieben der Austrittsoptik 40 in jeweils einer Richtung ist jeweils ein Aktuator 140, 141 vorgesehen, wobei bei einer konkreten Ausführungsform vorgesehen ist, dass der zumindest eine Aktuator 140, 141 ein Piezoaktuator ist. Ein typischer Stellweg für einen solchen Piezoaktuator liegt im Bereich von 100 µm (Mikrometern). Grundsätzlich können aber auch andere Aktuatore mit einem Stellweg von < 1 mm (weniger als einem Millimeter) zum Einsatz kommen.

Um eine gleichmäßige Verschiebung des gesamten Lichtbildes, bei dem sich also das Lichtbild an sich nicht ändert, sondern nur seine Lage, zu erreichen, ist es günstig, wenn alle von der Verschiebung betroffenen Mikro-Optiksysteme, insbesondere die Mikro-Austrittsoptiken dieselben optischen Parameter aufweisen, insbesondere identisch ausgebildet sind.

Außerdem ist bei der Auslegung der Projektionseinrichtung darauf zu achten, dass auch bei einer Verschiebung der Austrittsoptik kein Licht oder nur ein geringer Anteil des Lichtes, welches aus einer Mikro-Eintrittsoptik austritt, in eine nicht zugeordnete Mikro-Austrittsoptik eintritt. Dieser Anteil kann, wie oben erörtert, mithilfe von der zweiten Blendenvorrichtung reduziert werden.

Es kann aber auch vorgesehen sein, dass die Mikro-Optiksysteme unterschiedlich ausgebildet sind, um eine gezielte Veränderung des Lichtbildes zu erreichen.

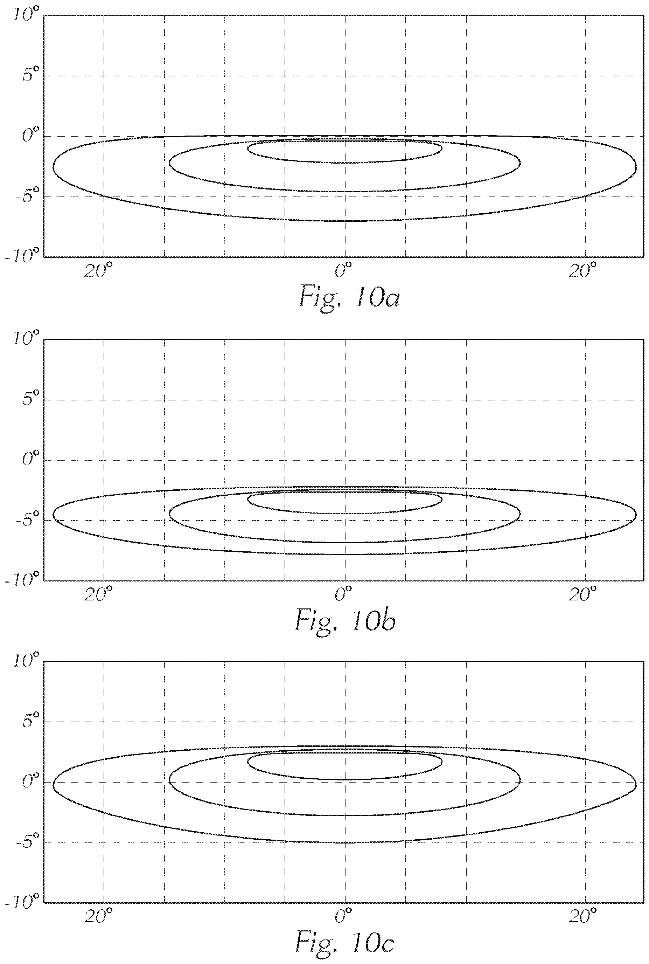

In der konkreten beispielhaften Ausführungsform reicht eine geringe Verschiebung der abbildenden Optik, d.h. der Austrittsoptik z.B. um 0,03 mm für eine Verschiebung des Lichtbildes um 0,8°. Beispielhaft zeigt Figur 10a eine schematische Lichtverteilung, Figur 10b zeigt dieselbe Lichtverteilung nach einem Verschieben der Austrittsoptik 40 vertikal nach unten, Figur 10c zeigt die Auswirkungen des Verschiebens der Austrittsoptik 40 vertikal nach oben auf die Lichtverteilung. Die Form der Lichtverteilung hat sich dabei nicht oder nur unwesentlich geändert, während die Lichtverteilung nach oben bzw. unten gewandert ist.

Eine Leuchtweitenregulierung von ca. 2,5° lässt sich beispielsweise mit einem Hub von ca. 1 mm erreichen.

Durch Verschieben der Austrittsoptik 40 kann es darüber hinaus zu gewissen Verzerrungen des Lichtbildes kommen. Bei der Auslegung des Gesamtsystems ist dabei darauf Bedacht zu nehmen, dass diese Verzerrungen den rechtlichen und technischen Anforderungen genügen. Diese Verzerrungen können ebenfalls mithilfe der zweiten Blendenvorrichtung 60, 70 reduziert werden.

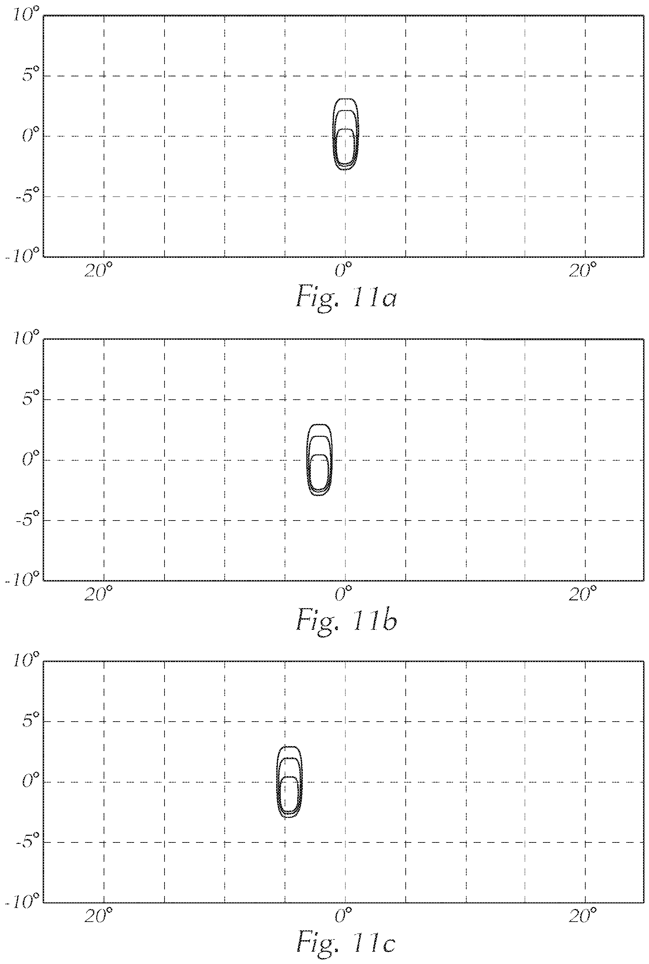

Figur 11a zeigt eine beispielhafte Teil-Lichtverteilung, erzeugt mit einem erfindungsgemäßen Mikroprojektions-Lichtmodul 1 oder einer oder mehreren Mikro-Optiksystemen eines solchen Mikroprojektions-Lichtmoduls 1, Figur 11b zeigt die Auswirkungen eines Verschiebens der Austrittsoptik 40 horizontal nach links auf die Teil-Lichtverteilung aus Figur 11a, und Figur 11c die Auswirkungen eines noch weiteren Verschiebens der Austrittsoptik 40 horizontal nach links auf die Teil-Lichtverteilung. Figur 11b zeigt dabei ein Verschieben der abbildenden Austrittsoptik 40 um ca. 0,1 mm und Figur 11c um ca. 0,2 mm.

Wie zu erkennen ist, reicht eine geringe Verschiebung aus, um eine merkliche Verschiebung des Lichtbildes in vertikaler und/oder horizontaler Richtung zu realisieren.

Bei einem herkömmlichen Projektionssystem mit einer Projektionslinse weist die Linse typische Durchmesser zwischen 60 mm und 90 mm auf. Bei einem erfindungsgemäßen Mikroprojektions-Lichtmodul weisen die einzelnen Mikro-Optiksysteme typische Abmessungen von ca. 2 mm x 2 mm (in V und H entsprechend) und eine Tiefe (in Z) von ca. 6 mm - 10 mm auf, sodass sich in Z-Richtung eine deutlich geringere Tiefe eines erfindungsgemäßen Mikroprojektions-Lichtmoduls im Vergleich zu herkömmlichen Modulen ergibt.

Die erfindungsgemäßen Mikroprojektions-Lichtmodule weisen eine geringe Bauraumtiefe auf und sind grundsätzlich frei formbar, d.h. es ist z.B. möglich ein erstes Mikroprojektions-Lichtmodul zur Erzeugung einer ersten Teil-Lichtverteilung getrennt von einem zweiten Mikroprojektions-Lichtmodul für eine zweite Teil-Lichtverteilung auszugestalten und diese relativ frei, d.h. vertikal V und/oder horizontal H und/oder in der Tiefe Z zueinander versetzt in einem Fahrzeugscheinwerfer anzuordnen, sodass sich auch Designvorgaben einfacher realisieren lassen.

Ein weiterer Vorteil eines erfindungsgemäßen Mikroprojektions-Lichtmoduls ist jener, dass zwar die Projektionseinrichtung sehr genau herzustellen ist, was mit heutigen Produktionsmethoden aber problemlos möglich ist, dafür aber das exakte Positionieren der Lichtquelle(n) in Bezug auf die Projektionsoptik entfällt. Eine exakte Positionierung ist insofern nur noch von untergeordneter Bedeutung, als die zumindest eine Lichtquelle einen ganzen Array von Mikro-Eintrittsoptiken beleuchtet, die alle im Wesentlichen dasselbe Lichtbild erzeugen. Anders formuliert bedeutet dies nichts anderes, als dass die "eigentliche" Lichtquelle von der oder den realen Lichtquelle(n) und dem Array der Mikro-Eintrittsoptiken gebildet ist. Diese "eigentliche" Lichtquelle beleuchtet dann die Mikro-Austrittsoptiken und gegebenenfalls die zugeordneten Blenden. Nachdem nun aber die Mikro-Eintritts- und Mikro-Austrittsoptiken bereits optimal aufeinander abgestimmt sind, da diese quasi ein System bilden, fällt eine nicht exakte Positionierung der realen Lichtquelle(n) weniger ins Gewicht.

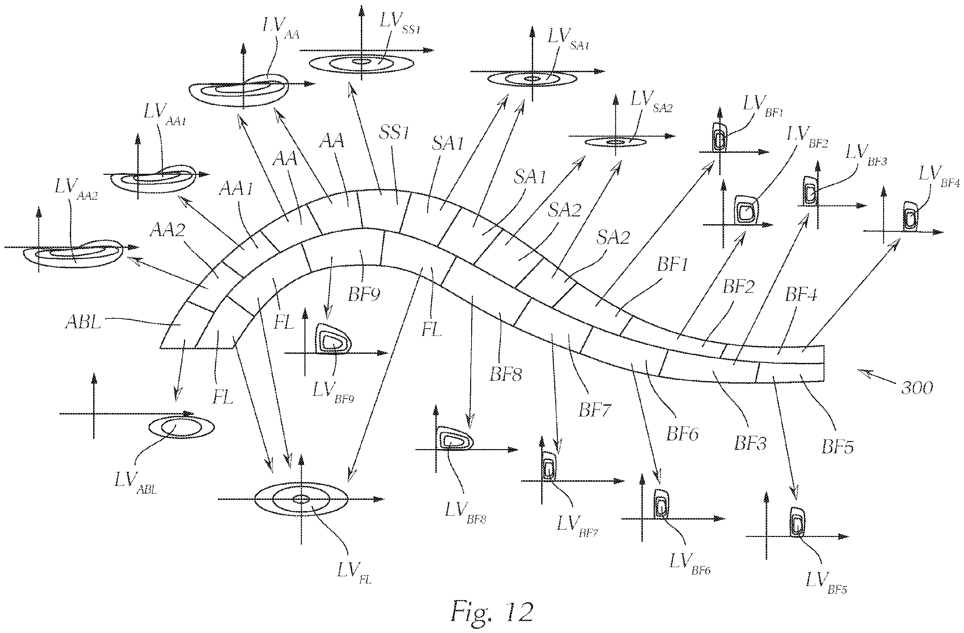

Figur 12 zeigt noch eine Beleuchtungsvorrichtung für einen Fahrzeugscheinwerfer, welche eine, zwei oder mehr Mikroprojektions-Lichtmodulen, wie sie oben beschrieben wurden, umfasst. Dabei sind mehrere Gruppen von unterschiedlichen Lichtmodulen vorgesehen, z.B. sind in Figur 12 Mikroprojektions-Lichtmodule der Gruppen AA, AA1, AA2, SS1, BF1 bis BF8, FL, ABL, SA1, SA2 dargestellt, die gemeinsam die Beleuchtungsvorrichtung bilden. Jede Gruppe AA, AA1, AA2, SS1, BF1 bis BF8, FL, ABL, SA1, SA2 umfasst vorzugsweise ein, zwei oder mehrere Mikroprojektions-Lichtmodule.

In dem gezeigten Beispiel weist jede Gruppe genau ein Mikroprojektions-Lichtmodul auf, welche im Folgenden aufgezählt sind. Dabei bezeichnet:
AA ein Mikroprojektions-Lichtmodul zur Erzeugung eines asymmetrischen, vorzugsweise abbildungsfehlerfreien Abblendlichts LV_{AA} im Fernfeld;
AA1, AA2 Mikroprojektions-Lichtmodule zur Erzeugung eines vorzugsweise abbildungsfehlerfreien asymmetrischen Abblendlichts LV_{AA1}, LV_{AA2} im Fernfeld im Kurvenlichtmodul;
SS1 ein Mikroprojektions-Lichtmodul zur Erzeugung einer symmetrischen vorzugsweise abbildungsfehlerfreien Lichtverteilung LV_{SS1} (Vorfeld eines Abblendlichts, Stadtlicht);
BF1 bis BF8 Mikroprojektions-Lichtmodule zur Erzeugung eines vorzugsweise abbildungsfehler- und blendfreien Fernlichtes LV_{BF1} - LV_{BF8}; die einzelnen vorzugsweise abbildungsfehlerfreien Lichtverteilungen LV_{BF1} - LV_{BF8} erzeugen gemeinsam eine vorzugsweise abbildungsfehlerfreie Fernlichtverteilung bzw. einen Teil davon, die einzelnen vorzugsweise abbildungsfehlerfreien Lichtverteilungen können bei Bedarf unabhängig voneinander ausgeblendet werden;
FL ein Mikroprojektions-Lichtmodul zur Erzeugung eines vorzugsweise abbildungsfehlerfreien Fernlichts LV_{FL};
ABL ein Mikroprojektions-Lichtmodul zur Erzeugung eines vorzugsweise abbildungsfehlerfreien Abbiegelichts LV_{ABL};
SA1, SA2 Mikroprojektions-Lichtmodule zu Erzeugung zusätzlicher Lichtanteile für vorzugsweise abbildungsfehlerfreies Autobahnlicht LV_{SA1}, LV_{SA2}.

Von Vorteil ist es bei einer solchen Beleuchtungsvorrichtung, wenn die Lichtquellen jeder Gruppe von Mikroprojektions-Lichtmodulen AA, AA1, AA2, SS1, BF1 bis BF8, FL, ABL, SA1, SA2 unabhängig von den Lichtquellen der anderen Gruppen ansteuerbar sind, sodass die einzelnen abbildungsfehlerfreien Lichtverteilungen bzw. Teil-Lichtverteilungen unabhängig voneinander ein- und ausgeschaltet und/oder gedimmt werden können.

Figur 12 ist eine rein schematische Darstellung, und es ist im Zusammenhang mit Figur 12 von "Mikroprojektions-Lichtmodulen" die Rede. Tatsächlich zeigt Figur 12 lediglich und rein schematisch die Projektionseinrichtungen AA, AA1, AA2, SS1, BF1 - BF8, FL, ABL, SA1, SA2 der einzelnen Mikro-Projektionslichtmodule, und wie in Figur 12 zu erkennen ist, bilden die Projektionseinrichtungen AA, AA1, AA2, SS1, BF1 - BF8, FL, ABL, SA1, SA2 der einzelnen Mikroprojektions-Lichtmodule ein gemeinsames Bauteil in Form z.B. eines geschwungenen Bandes. Diese Projektionseinrichtungen können beispielsweise auf einer Folie angeordnet sein.

Es können mit der vorliegenden Erfindung somit die Linsenarrays aus Mikro-Eintritts- und Mikro-Austrittsoptiken frei geformt werden, und es können auch zwei oder mehrere erfindungsgemäße Mikroprojektions-Lichtmodule über ein gemeinsames Projektionseinrichtungs-Bauteil zu einer Beleuchtungsvorrichtung zusammengefasst werden, wobei vorzugsweise dann jenen Bereichen des Projektionseinrichtungs-Bauteiles, welche einem bestimmten vorgegebenen Mikroprojektions-Lichtmodul (und somit einer unabhängig ansteuerbaren Lichtquelle) zugeordnet sind, die Mikro-Optiksysteme identische ausgebildet sind.

Des Weiteren zeigen die Figuren 13a bis 13c, wie oben bereits kurz erwähnt, einige denkbare Varianten, Kombinationen oder andere Unterteilungen der Mikro-Optiken und der optional vorgesehenen Blendenvorrichtungen.

Figur 13a zeigt ein Beispiel, in welchem in einem Mikro-Optiksystem die Mikro-Eintrittsoptik 31 als Fresnel-Linse und die Mikro-Austrittsoptik 41 als "herkömmliche" Linse ausgebildet ist.

Figur 13b zeigt ein Beispiel, bei welchem die Mikro-Eintrittsoptik 31 als "herkömmliche" Linse und die Mikro-Austrittsoptik 41 als Fresnel-Linse ausgebildet ist.

Figur 13c zeigt ein Beispiel, bei welchem die Mikro-Eintrittsoptik 31 als "herkömmliche" Linse und die Mikro-Austrittsoptik 41 als Array von Mikro-Mikro-Austrittsoptiken (Mikro-Mikro-Linsen) ausgebildet ist. Dabei können sowohl der gezeigte Ausschnitt der ersten Blendenvorrichtung 50 als auch der gezeigte Ausschnitt der zweiten Blendenvorrichtung 60, 70 unterschiedliche Anzahl an Blenden umfassen. Es ist z.B. durchaus denkbar dass der Ausschnitt der ersten Blendenvorrichtung 50 in Fig. 13c nur eine einzige Blende umfasst, wobei der Ausschnitt der zweiten Blendenvorrichtung 60, 70 mehrere Blenden umfasst, wobei jede Blende einer Mikro-Mikro-Austrittsoptik korrespondiert, und vice versa.

Ein wichtiges Merkmal, das in den Figuren 13a bis 13c veranschaulicht ist, dass die zweite Blendenvorrichtung 60, 70 (wenn diese Blendenvorrichtung vorgesehen ist) in die Lichtausbreitungsrichtung zwischen der ersten Blendenvorrichtung 50 (wenn vorgesehen) und der Mikro-Austrittsoptik 41 angeordnet ist und als eine Aperturblende wirkt. Die Lage der zweiten Blendenvorrichtung 60, 70 ist im Strahlengang also nicht frei wählbar. Die erste Blendenvorrichtung 50 ist eine Leuchtfeld-/Gesichtfeldblende. Dabei ist es hinsichtlich der Lichtbildqualität vorteilhaft, die erste Blendenvorrichtung in der Brennfläche oder in der Zwischenbildebene des Mikro-Optiksystems anzuordnen.

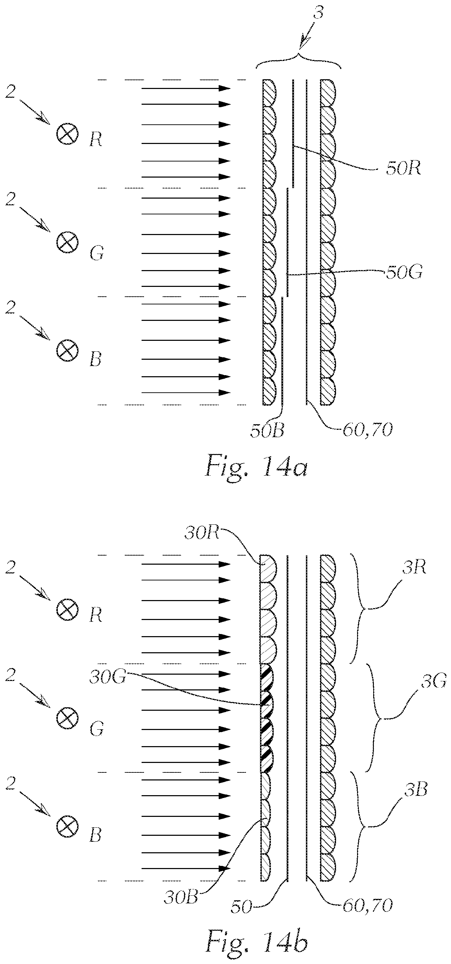

Figur 14a und Figur 14b zeigen zwei weitere Ausführungsformen. Dabei ist vorgesehen, dass unterschiedliche Bereiche, z.B. genau drei unterschiedliche Bereiche, von Mikro-Optiksystemen 3 mit Lichtquellen 2 unterschiedlicher Farbe R, G, B beleuchtet werden, beispielsweise ein Bereich mit rotem Licht R, ein anderer Bereich mit grünem Licht G und ein dritter Bereich mit blauem Licht B.

Die unterschiedlichen Bereiche können dabei zu einer Projektionseinrichtung 3 (Fig. 14a), aber auch zu unterschiedlichen (zwei oder mehreren, z.B. drei, wie Fig. 14b zeigt) Projektionseinrichtungen bzw. zu einer Projektionseinrichtung oder zu zwei oder mehreren, insbesondere drei Projektionseinrichtungen gehören. Wichtig ist dabei lediglich, dass jeder Bereich an Mikro-Optiksystemen dieselbe Lichtverteilung wie die anderen Bereiche erzeugt. Um den oben beschriebenen Farbfehlern Rechnung zu tragen, ist bei der Projektionseinrichtung der Fig. 14a vorgesehen, dass die erste Blendenvorrichtung drei Teil-Blendenvorrichtungen 50R, 50G, 50B umfasst, wobei jede Teil-Blendenvorrichtung in der zu der jeweiligen Farbe korrespondierenden Brennfläche angeordnet ist. So liegen die Brennpunkte der Mikro-Optiksysteme für das rote Licht L in die Lichtausbreitungsrichtung gesehen weiter vorn als die Brennpunkte der Mikro-Optiksysteme für das grüne Licht G, welche ihrerseits vor den Brennpunkten der Mikro-Optiksysteme für das blaue Licht B liegen, wie es der Fig. 14a zu entnehmen ist.

Die in der Fig. 14a gezeigte Ausführungsform hat den Vorteil, dass allen Lichtquellen, welche Licht unterschiedlicher Farben abstrahlen, eine einzige, vorzugsweise einstückig ausgebildete, Eintrittsoptik zugeordnet ist. Dabei kann auch vorgesehen sein, dass die erste Blendenvorrichtung und/oder die zweite Blendenvorrichtung drei Teil-Blendenvorrichtungen umfasst, welche zur Korrektur der Farbfehler herangezogen werden können.

Bei der in Fig. 14b dargestellten Ausführungsform handelt es sich um drei Projektionseinrichtungen 3R, 3G, 3B, die miteinander einstückig oder voneinander getrennt ausgebildet sein können. Dabei sind die erste Blendenvorrichtung 50 und die zweite Blendenvorrichtung 60, 70 vorgesehen. Die Projektionsvorrichtungen weisen unterscheiden sich in dem Beispiel durch die Form der Eintrittsoptiken 30R, 30G, 30B, die derart ausgebildet sind, dass die Brennflächen der drei je einer Lichtfarbe korrespondierenden Projektionseinrichtungen 3R, 3G, 3B zusammenfallen. Dieser Effekt kann beispielsweise durch Anpassung der Dicke und/oder der Krümmung der die Eintrittsoptiken bildenden Mikro-Eintrittsoptiken erreicht werden. Durch Ändern der Dicke und/oder der Krümmung der Mikro-Eintrittsoptiken werden die Brennweiten der Mikro-Optiksysteme dahingehend geändert, wodurch der Abstand zwischen der Grenzfläche 31' der Eintrittsoptik 30 und der Brennfläche unabhängig von der Farbe des Lichts R, G, B festgelegt werden kann, wie es in Fig. 14b gezeigt ist. Die erste Blendenvorrichtung 50 der Fig. 14b, die vorzugsweise einstückig ausgebildet ist, ist dabei in den zusammenfallenden Brennflächen der Projektionseinrichtungen 3R, 3G, 3B angeordnet. Die in Fig. 14b gezeigte Ausführungsform hat den Vorteil der großen Designfreiheit, die beispielsweise durch drei voneinander getrennt ausgebildeten Projektionseinrichtungen 3R, 3G, 3B gewährt sein kann.

Durch Überlagerung der Lichtbilder / Lichtverteilungen aus den unterschiedlichen Bereichen ergibt sich dann insgesamt ein weißes vorzugsweise abbildungsfehlerfreies Lichtbild / eine weiße vorzugsweise abbildungsfreie Lichtverteilung.

Verwendet man in diesem Zusammenhang als Lichtquellen Laser-Lichtquellen, so werden auf Grund der hohen Leuchtintensitäten von Lasern nur wenige Mikroprojektionsarrays (Bereiche) zur Erzeugung einer weißen Lichtverteilung benötigt, sodass sich in lateraler Richtung ein kleineres Lichtmodul erzeugen lässt.

## Patentansprüche

1. Mikroprojektions-Lichtmodul (1) für einen Fahrzeugscheinwerfer, umfassend
*) zumindest eine Lichtquelle (2) sowie
*) zumindest eine Projektionseinrichtung (3), welche das von der zumindest einen Lichtquelle (2) austretende Licht in einen Bereich vor dem Kraftfahrzeug in Form von zumindest einer Lichtverteilung abbildet, wobei
die Projektionseinrichtung (3) umfasst:
-) eine Eintrittsoptik (30), welche eine, zwei oder mehr Mikro-Eintrittsoptiken (31) aufweist, welche vorzugsweise in einem Array angeordnet sind,
-) eine Austrittsoptik (40), welche eine, zwei oder mehr Mikro-Austrittsoptiken (41) aufweist, welche vorzugsweise in einem Array angeordnet sind, wobei
jeder Mikro-Eintrittsoptik (31) genau eine Mikro-Austrittsoptik (41) zugeordnet ist,
wobei die Mikro-Eintrittsoptiken (31) derart ausgebildet und/oder die Mikro-Eintrittsoptiken (31) und die Mikro-Austrittsoptiken (41) derart zueinander angeordnet sind, dass im Wesentlichen das gesamte aus einer Mikro-Eintrittsoptik (31) austretende Licht genau nur in die zugeordnete Mikro-Austrittsoptik (41) eintritt, und wobei das von den Mikro-Eintrittsoptiken (31) vorgeformte Licht von den Mikro-Austrittsoptiken (41) in einen Bereich vor dem Kraftfahrzeug als zumindest eine Lichtverteilung (LV1 - LV5; GLV) abgebildet wird,
**dadurch gekennzeichnet, dass** der zumindest einen Lichtquelle (2) eine Vorsatzoptikeinrichtung (4) zugeordnet ist, in welche zumindest eine Vorsatzoptikeinrichtung (4) die zumindest eine Lichtquelle (2) das von ihr emittierte Licht einstrahlt, und welche Vorsatzoptikeinrichtung (4) derart ausgebildet ist, dass das aus ihr austretende Licht im Wesentlichen parallel gerichtet ist, und die Eintrittsoptik (30) zumindest eine plane Grenzfläche (31') aufweist, wobei die zumindest eine plane Grenzfläche (31') der Vorsatzoptikeinrichtung (4) zugewandt ist.

2. Mikroprojektions-Lichtmodul nach Anspruch 1, **dadurch gekennzeichnet, dass** das aus der Vorsatzoptikeinrichtung (4) austretende Licht auf die zumindest eine plane Grenzfläche (31') auftrifft.

3. Mikroprojektions-Lichtmodul nach Anspruch 1 oder 2, **dadurch gekennzeichnet, dass** das aus der Vorsatzoptikeinrichtung (4) austretende Licht im Wesentlichen die ganze plane Grenzfläche (31') bestrahlt.

4. Mikroprojektions-Lichtmodul nach einem der Ansprüche 1 bis 3, **dadurch gekennzeichnet, dass** die Vorsatzoptikeinrichtung (4) als ein Kollimator ausgebildet ist.

5. Mikroprojektions-Lichtmodul nach einem der Ansprüche 1 bis 4, **dadurch gekennzeichnet, dass** die Vorsatzoptikeinrichtung (4) mit der Eintrittsoptik (30) einstückig ausgebildet ist.

6. Mikroprojektions-Lichtmodul nach einem der Ansprüche 1 bis 5, **dadurch gekennzeichnet, dass** eine Mikro-Eintrittsoptik (31) und eine der einen Mikro-Eintrittsoptik (31) zugeordnete Mikro-Austrittsoptik (41) ein Mikro-Optiksystem bilden, welches Mikro-Optiksystem zumindest einen Mikro-Optik-Brennpunkt (F1) aufweist und/oder das durch es durchtretende Licht in horizontaler Richtung aufweitet.

7. Mikroprojektions-Lichtmodul nach einem der Ansprüche 1 bis 6, **dadurch gekennzeichnet, dass** jede Mikro-Eintrittsoptik (31) das durch sie durchtretende Licht in den zumindest einen Mikro-Optik-Brennpunkt (F1) fokussiert.

8. Mikroprojektions-Lichtmodul nach Anspruch 6 oder 7, **dadurch gekennzeichnet, dass** ein Mikro-Optik-Brennpunkt (F1) jeder Mikro-Eintrittsoptik (31) in Lichtaustrittsrichtung vor der zugeordneten Mikro-Austrittsoptik (41) liegt, wobei die Mikro-Eintrittsoptiken (31) das durch sie durchtretende Licht in vertikaler Richtung jeweils auf den vor der Mikro-Austrittsoptik (40) liegenden Mikro-Optik-Brennpunkt (F1) fokussieren, und wobei die Mikro-Austrittsoptiken (41) einen jeweils mit dem Mikro-Optik-Brennpunkt (F1) der zugeordneten Mikro-Eintrittsoptik (31) zusammenfallenden Brennpunkt aufweisen.

9. Mikroprojektions-Lichtmodul nach einem der Ansprüche 1 bis 8, **dadurch gekennzeichnet, dass** jede Mikro-Eintrittsoptik (31) eine gekrümmte Grenzfläche (30') aufweist, welche gekrümmte Grenzfläche (30') einen Krümmungsradius-Minimalwert (Rₘᵢₙ) aufweist.

10. Mikroprojektions-Lichtmodul nach einem der Ansprüche 1 bis 9, **dadurch gekennzeichnet, dass** jede Mikro-Eintrittsoptik (31) als eine Sammeloptik oder als eine Freiform-Optik ausgebildet ist und/oder jede Mikro-Austrittsoptik (41) als eine Projektionsoptik oder als eine sphärische Linse oder als eine asphärische Linse oder als eine Freiform-Linse ausgebildet ist.

11. Mikroprojektions-Lichtmodul nach einem der Ansprüche 1 bis 10, **dadurch gekennzeichnet, dass** der Vorsatzoptikeinrichtung (4) zugewandten Grenzflächen (31', 41') von einander zugeordneten Mikro-Eintrittsoptiken (31) und Mikro-Austrittsoptiken (41) kongruent zueinander, vorzugsweise plan ausgebildet und vorzugsweise auch kongruent zueinander angeordnet sind.

12. Mikroprojektions-Lichtmodul nach einem der Ansprüche 1 bis 11, **dadurch gekennzeichnet, dass** die optischen Achsen (310,410) von einander zugeordneten Mikro-Eintrittsoptiken (31) und Mikro-Austrittsoptiken (41) parallel zueinander verlaufen, vorzugsweise zusammenfallen.

13. Mikroprojektions-Lichtmodul nach einem der Ansprüche 1 bis 12, **dadurch gekennzeichnet, dass** zwischen der Eintrittsoptik (30) und der Austrittsoptik (40) zumindest eine erste Blendenvorrichtung (50) angeordnet ist wobei die erste Blendenvorrichtung (50) vorzugsweise in einer Ebene liegt, welche von den Mikro-Optik-Brennpunkten (F1) aufgespannt ist, und beispielsweise für zumindest ein Paar von einander zugeordneten Mikro-Eintritts- und Mikro-Austrittsoptiken (31, 41), vorzugsweise für mehrere Paare und insbesondere für alle Paare eine Blende (51, 52, 53, 54, 55) mit jeweils zumindest einer, beispielsweise genau einer optisch wirksamen Blendenkante (51', 52', 53', 54', 55') aufweist, wobei zwischen der Eintrittsoptik (30) und der Austrittsoptik (40) vorzugsweise zumindest eine zweite Blendenvorrichtung (60, 70) angeordnet ist, wobei die zweite Blendenvorrichtung (60, 70) vorzugsweise zwischen der ersten Blendenvorrichtung (50) und der Austrittsoptik (40) oder zwischen Eintrittsoptik (30) und der ersten Blendenvorrichtung (50) angeordnet ist, wobei vorzugsweise die zweite Blendenvorrichtung (60, 70) für zumindest ein Paar von einander zugeordneten Mikro-Eintritts- und Mikro-Austrittsoptiken (31, 41), vorzugsweise für mehrere Paare und insbesondere für alle Paare eine Blende (61 bis 65, 71 bis 75) mit jeweils zumindest einer, beispielsweise genau einer optisch wirksamen Blendenkante (61' bis 65', 71' bis 75') aufweist, wobei vorzugsweise alle Blenden der zweiten Blendenvorrichtung (60, 70) identische Blendenkanten oder insbesondere zumindest zwei Blenden der zweiten Blendenvorrichtung (60, 70) unterschiedlich gestaltete Blendenkanten aufweisen, wobei vorzugsweise zumindest eine der optisch wirksamen Blendenkanten (61' bis 65', 71' bis 75') einen giebelförmigen Verlauf aufweist und/oder beispielsweise zumindest eine obere oder eine untere, bezüglich der vertikalen Richtung (V), optisch wirksame Blendenkante (61' bis 65', 71' bis 75') der Blende (61 bis 65, 71 bis 75) einen schräg, von der optischen Achse (310, 410) nach außen der Blende hin, aufsteigenden Verlauf aufweist, wobei vorzugsweise die erste Blendenvorrichtung (50) und die zweite Blendenvorrichtung (60) identisch und/oder die erste Blendenvorrichtung (50) mit der zweiten Blendenvorrichtung (60, 70) einstückig ausgebildet sind, insbesondere ist die Austrittsoptik (40) mit der zumindest einen zweiten Blendenvorrichtung (60, 70) einstückig ausgebildet und/oder die zweite Blendenvorrichtung (60, 70) auf der der Eintrittsoptik (30) zugewandten Grenzfläche (40') der Austrittsoptik (40) angeordnet.

14. Beleuchtungsvorrichtung für einen Fahrzeugscheinwerfer, umfassend eine, zwei oder mehr an Mikroprojektions-Lichtmodulen (1) nach einem der Ansprüche 1 bis 13, wobei vorzugsweise zwei oder mehr Gruppen von Mikroprojektions-Lichtmodulen (AA, AA1, AA2, SS1, BF1 - BF8, FL, ABL, SA1, SA2) vorgesehen sind, und wobei jede Gruppe ein, zwei oder mehrere Mikroprojektions-Lichtmodule (1) umfasst, wobei Mikroprojektions-Lichtmodule (AA, AA1, AA2, SS1, BF1 - BF8, FL, ABL, SA1, SA2) einer Gruppe dieselbe Lichtverteilung (LV_{AA}, LV_{AA1}, LV_{AA2}, LV_{SS1}, LV_{BF1} - LV_{BF8}, LV_{FL}, LV_{ABL}, LV_{SA1}, LV_{SA2}) erzeugen, und wobei Mikroprojektions-Lichtmodule (AA, AA1, AA2, SS1, BF1 - BF8, FL, ABL, SA1, SA2) aus unterschiedlichen Gruppen unterschiedliche Lichtverteilungen (LV_{AA}, LV_{AA1}, LV_{AA2}, LV_{SS1}, LV_{BF1} - LV_{BF8}, LV_{FL}, LV_{ABL}, LV_{SA1}, LV_{SA2}) erzeugen, wobei die Lichtquellen jeder Gruppe von Mikroprojektions-Lichtmodulen unabhängig von den Lichtquellen der anderen Gruppen ansteuerbar sind.

15. Fahrzeugscheinwerfer mit einer oder mehreren Beleuchtungsvorrichtungen nach Anspruch 14.

## Claims

1. Micro-projection light module (1) for a vehicle headlamp, comprising
*) at least one light source (2) and
*) at least one projection device (3) which projects the light that is emitted from said at least one light source (2), in the form of at least one light distribution, into a region in front of the vehicle, wherein
the projection device (3) comprises:
-) an entry lens (30) that has one, two, or multiple micro-entry lenses (31) preferably arranged in an array,
-) an exit lens (40) that has one, two, or multiple micro-exit lenses (41) preferably arranged in an array, wherein
precisely one micro-exit lens (41) is associated with each micro-entry lens (31), the micro-entry lenses (31) being designed such that, and/or the micro-entry lenses (31) and micro-exit lenses (41) being arranged relative to one another such that, substantially all the light emitted from a micro-entry lens (31) enters precisely only into the associated micro-exit lens (41), and wherein
the light that is pre-shaped by the micro-entry lenses (31) is projected from the micro-exit lenses (41) into a region in front of the motor vehicle in the form of at least one light distribution (LV1 - LV5; GLV),
**characterized in that**
an optical attachment device (4) is associated with the at least one light source (2), the at least one light source (2) irradiating the light emitted therefrom into said at least one optical attachment device (4), said optical attachment device (4) being designed such that the light emitted therefrom is oriented substantially parallel, and the entry lens (30) having at least one planar boundary surface (31') which faces the optical attachment device (4).

2. Micro-projection light module according to Claim 1, **characterized in that**
the light emerging from the optical attachment device (4) impinges on the at least one planar boundary surface (31).

3. Micro-projection light module according to Claim 1 or 2,
**characterized in that**
the light emerging from the optical attachment device (4) essentially irradiates the whole planar boundary surface (31').

4. Micro-projection light module according to any one of Claims 1 to 3,
**characterized in that**
the optical attachment device (4) is designed as a collimator.

5. Micro-projection light module according to any one of Claims 1 to 4,
**characterized in that**
the optical attachment device (4) is designed integrally with the entry lens (30).

6. Micro-projection light module according to any one of Claims 1 to 5,
**characterized in that**
a micro-entry lens (31) and a micro-exit lens (41) associated with the one micro-entry lens (31) form a micro-lens system, which micro-lens system has at least one micro-lens focal point (F1) and/or which diverges the light passing through it in the horizontal direction.

7. Micro-projection light module according to any one of Claims 1 to 6,
**characterized in that**
each micro-entry lens (31) focusses the light passing through it into the at least one micro-lens focal point (F1).

8. Micro-projection light module according to Claim 6 or 7,
**characterized in that**
a micro-lens focal point (F1) of each micro-entry lens (31) is located in the light-exit direction in front of the associated micro-exit lens (41), wherein the micro-entry lenses (31) focus the light passing through them in the vertical direction onto each micro-lens focal point (F1) located in front of the micro-exit lens (40), and wherein the micro-exit lenses (41) have a focal point coincident in each case with the micro-lens focal point (F1) of the associated micro-entrance lens (31).

9. Micro-projection light module according to any one of Claims 1 to 8,
**characterized in that**
each micro-entrance lens (31) has a curved boundary surface (30'), which curved boundary surface (30') has a minimum value for the curvature radius (Rₘᵢₙ).

10. Micro-projection light module according to any one of Claims 1 to 9,
**characterized in that**
each micro-entrance lens (31) is designed as a collection lens or as a free-form lens and/or each micro-exit lens (41) is designed as a projection system or as a spherical lens or as an aspherical lens or as a free-form lens.

11. Micro-projection light module according to any one of Claims 1 to 10,
**characterized in that**
boundary surfaces (31', 41') facing the optical attachment device (4) of micro-entry lenses (31) and micro-exit lenses (41) associated to one another are designed congruent to each other, preferably designed to be planar and preferably also arranged congruently to each other.

12. Micro-projection light module according to any one of Claims 1 to 11,
**characterized in that**
the optical axes (310, 410) of micro-entry lenses (31) and micro-exit lenses (41) associated to one another run parallel to each other, preferably coinciding.

13. Micro-projection light module according to any one of Claims 1 to 12,
**characterized in that**
between the entry lens and the exit lens (40) at least one first aperture device (50) is arranged, wherein the first aperture device (50) preferably lies in a plane which is defined by the micro-lens focal points (F1), and, for example, for at least one pair of micro-entry and micro-exit lenses (31, 41) associated to one another, preferably for a plurality of pairs and in particular for all pairs, has an aperture (51, 52, 53, 54, 55), in each case with at least one, for example exactly one, optically active aperture edge (51', 52', 53', 54', 55'),
wherein between the entry lens (30) and the exit lens (40) at least one second aperture device (60, 70) is arranged, wherein the second aperture device (60, 70) is preferably arranged between the first aperture device (50) and the exit lens (40), or between the entry lens (30) and the first aperture device (50), wherein the second aperture device (60, 70) for at least one pair of micro-entry and micro-exit lenses (31, 41) associated to one another, preferably for a plurality of pairs and in particular for all the pairs has an aperture (61 to 65, 71 to 75), with in each case at least one, for example exactly one, optically active aperture edge (61' to 65', 71' to 75'), wherein preferably all apertures of the second aperture device (60, 70) have identical aperture edges or, in particular, at least two apertures of the second aperture device (60, 70) have differently designed aperture edges, wherein preferably at least one of the optically active aperture edges (61' to 65', 71' to 75') has a gable-shaped profile and/or, for example, at least one upper or one lower, with respect to the vertical direction (V), optically active aperture edge (61' to 65', 71' to 75') of the aperture (61 to 65, 71 to 75), has an inclined ascending profile from the optical axis (310, 410) to the outside of the aperture, wherein preferably the first aperture device (50) and the second aperture device (60) are identical and/or the first aperture device (50) are formed integrally with the second aperture device (60, 70), in particular the exit lens (40) is formed integrally with the at least one second aperture device (60, 70) and/or the second aperture device (60, 70) are arranged on the boundary surface (40') of the exit lens (40) facing the entry lens (30).

14. Lighting device for a vehicle headlamp, comprising one, two or more micro-projection light modules (1) according to any one of Claims 1 to 13, wherein preferably two or more groups of micro-projection light modules (AA, AA1, AA2, SS1, BF1 - BF8, FL, ABL, SA1, SA2) are provided, and wherein each group comprises one, two or more micro-projection light modules (1), wherein micro-projection light modules (AA, AA1, AA2, SS1, BF1 - BF8, FL, ABL, SA1, SA2) of a group generate the same light distribution (LV_{AA}, LV_{AA1}, LV_{AA2}, LV_{SS1}, LV_{BF1} - LV_{BF8}, LV_{FL}, LV_{ABL}, LV_{SA1}, LV_{SA2}), and wherein micro-projection light modules (AA, AA1, AA2, SS1, BF1 - BF8, FL, ABL, SA1 and SA2) from different groups generate different light distributions (LV_{AA}, LV_{AA1}, LV_{AA2}, LV_{SS1}, LV_{BF1} - LV_{BF8}, LV_{FL}, LV_{ABL}, LV_{SA1}, LV_{SA2}), wherein the light sources of each group of micro-projection light modules can be controlled independently of the light sources of the other groups.

15. Vehicle headlamp having one or more lighting devices according to Claim 14.

## Revendications

1. Module d'éclairage à micro-projection (1) destiné à un projecteur de véhicule automobile, comprenant
*) au moins un dispositif de projection (2), et
*) au moins un dispositif de projection (3), lequel reproduit la lumière sortant au moins sous la forme d'au moins une répartition lumineuse d'une source lumineuse (2) dans une zone située devant le véhicule automobile,
le dispositif de projection (3) comprenant :
-) un élément optique d'entrée (30), lequel comporte une, deux ou plusieurs micro-optiques d'entrée (31), lesquelles sont disposées de préférence dans un ensemble,
-) un élément optique de sortie (40), lequel comporte une, deux ou plusieurs micro-optiques de sortie (41), lesquelles sont disposées de préférence dans un ensemble,
exactement une micro-optique de sortie (41) étant attribuée à chaque micro-optique d'entrée (31),
les micro-optiques d'entrée (31) étant constituées de telle sorte et/ou les micro-optiques d'entrée (31) et les micro-optiques de sortie (41) disposées les unes par rapport aux autres de telle sorte que pour l'essentiel toute la lumière sortant d'une micro-optique d'entrée (31) ne pénètre exactement que dans la micro-optique de sortie attribuée (41), et
la lumière préalablement mise en forme par les micro-optiques d'entrée (31) étant reproduite par les micro-optiques de sortie (41) sous la forme d'au moins une répartition lumineuse (LV1-LV5 ; GLV) dans une zone située devant le véhicule automobile,
**caractérisé en ce qu'**un dispositif d'optique additionnel (4) est attribué à au moins une source lumineuse (2), dispositif d'optique additionnelle (4) dans lequel au moins une source lumineuse (2) projette la lumière émise par celle-ci et lequel dispositif d'optique additionnelle (4) est constitué de telle sorte que la lumière sortant de celui-ci est dirigée pour l'essentiel parallèlement et l'élément optique d'entrée (30) comporte au moins une surface de séparation plane (31'), au moins une surface de séparation plane (31') étant tournée vers le dispositif d'optique additionnelle (4).

2. Module d'éclairage à micro-projection selon la revendication 1, **caractérisé en ce que** la lumière sortant du dispositif d'optique additionnelle (4) frappe au moins une surface de séparation plane (31').

3. Module d'éclairage à micro-projection selon la revendication 1 ou 2, **caractérisé en ce que** la lumière sortant du dispositif d'optique additionnelle (4) irradie pour l'essentiel toute la surface de séparation plane (31').

4. Module d'éclairage à micro-projection selon l'une quelconque des revendications 1 à 3, **caractérisé en ce que** le dispositif d'optique additionnelle (4) est constitué comme un collimateur.

5. Module d'éclairage à micro-projection selon l'une quelconque des revendications 1 à 4, **caractérisé en ce que** le dispositif d'optique additionnelle (4) est constitué en une seule pièce avec l'élément optique d'entrée (30).

6. Module d'éclairage à micro-projection selon l'une quelconque des revendications 1 à 5, **caractérisé en ce qu'**une micro-optique d'entrée (31) et une micro-optique de sortie (41) attribuée à une micro-optique d'entrée (31) forment un système micro-optique, lequel système micro-optique comporte au moins un foyer de micro-optique (F1) et/ou élargit la lumière le traversant en direction horizontale.

7. Module d'éclairage à micro-projection selon l'une quelconque des revendications 1 à 6, **caractérisé en ce que** chaque micro-optique d'entrée (31) focalise la lumière la traversant dans au moins un foyer de micro-optique (F1).

8. Module d'éclairage à micro-projection selon la revendication 6 ou 7, **caractérisé en ce qu'**un foyer de micro-optique (F1) de chaque micro-optique d'entrée (31) se situe dans la direction de sortie de lumière située devant la micro-optique de sortie attribuée (41), les micro-optiques d'entrée (31) focalisant la lumière les traversant en direction verticale respectivement sur le foyer de micro-optique (F1) se situant devant la micro-optique de sortie (40) et les micro-optiques de sortie (41) comportant un foyer coïncidant respectivement avec le foyer de micro-optique (F1) de la micro-optique d'entrée attribuée (31) .

9. Module d'éclairage à micro-projection selon l'une quelconque des revendications 1 à 8, **caractérisé en ce que** chaque micro-optique d'entrée (31) comporte une surface de séparation incurvée (30'), laquelle surface de séparation incurvée (30') comporte une valeur minimale de rayon de courbure (Rₘᵢₙ).

10. Module d'éclairage à micro-projection selon l'une quelconque des revendications 1 à 9, **caractérisé en ce que** chaque micro-optique d'entrée (31) est constituée sous la forme d'une optique convergente ou comme une optique de forme libre et/ou chaque micro-optique de sortie (41) est constituée sous la forme d'une optique de projection ou sous la forme d'une lentille sphérique ou sous la forme d'une lentille asphérique ou sous la forme d'une lentille de forme libre.

11. Module d'éclairage à micro-projection selon l'une quelconque des revendications 1 à 10, **caractérisé en ce que** les surfaces de séparations (31', 41') tournées vers le dispositif d'optique additionnelle (4) des micro-optiques d'entrée (31) et des micro-optiques de sortie (41) réciproquement attribuées sont constituées de façon congruente l'une par rapport à l'autre, de préférence constituées planes et de préférence également disposées de façon congruente les unes par rapport aux autres.

12. Module d'éclairage à micro-projection selon l'une quelconque des revendications 1 à 11, **caractérisé en ce que** les axes optiques (310, 410) des micro-optiques d'entrée (31) et des micro-optiques de sortie (41) réciproquement attribuées passent parallèlement les unes par rapport aux autres, de préférence coïncident.

13. Module d'éclairage à micro-projection selon l'une quelconque des revendications 1 à 12, **caractérisé en ce qu'**au moins un premier dispositif d'écran (50) est disposé entre l'élément optique d'entrée (30) et l'élément optique de sortie (40), le premier dispositif d'écran (50) se situant de préférence dans un plan, lequel est défini par les foyers de micro-optique (F1) et comporte par exemple pour au moins une paire de micro-optiques d'entrée et de sortie (31, 41) conjointement attribuées, de préférence pour plusieurs paires et notamment pour toutes les paires, un écran (51, 52, 53, 54, 55) avec respectivement par exemple exactement au moins un bord d'écran (51', 52', 53', 54', 55'), optiquement actif, de préférence au moins un deuxième dispositif d'écran (60, 70) étant disposé entre l'élément optique d'entrée (30) et l'élément optique de sortie (40), le deuxième dispositif d'écran (60, 70) étant disposé de préférence entre le premier dispositif d'écran (50) et l'élément optique de sortie (40) ou entre l'élément optique d'entrée (30) et le premier dispositif d'écran (50), le deuxième dispositif d'écran (60, 70) comportant de préférence pour au moins une paire de micro-optiques d'entrée et de sortie (31, 41), de préférence pour plusieurs paires et notamment pour toutes les paires, un écran (61 à 65, 71 à 75) avec respectivement par exemple exactement au moins un bord d'écran (61' à 65', 71' à 75') optiquement actif, de préférence tous les écrans du deuxième dispositif d'écran (60, 70) comportant des bords d'écran identiques ou notamment au moins deux écrans du deuxième dispositif d'écran (60, 70) comportant des bords d'écran de structure différente, de préférence au moins un des bords d'écran optiquement actifs (61' à 65', 71' à 75') comportant un profil en forme de pignon et/ou par exemple au moins un bord d'écran (61' à 65', 71' à 75') optiquement actif de l'écran (61 à 65, 71 à 75), supérieur ou inférieur, par rapport à la direction verticale (V) comportant un profil ascendant de façon oblique de l'axe optique (310, 410) vers l'extérieur de l'écran, le premier dispositif d'écran (50) et le deuxième dispositif d'écran (60) étant de préférence constitués de façon identique et/ou le premier dispositif d'écran (50) étant constitué avec le deuxième dispositif d'écran (60, 70) en une seule pièce, l'élément optique de sortie (40) étant notamment constituée en une seule pièce avec au moins un deuxième dispositif d'écran (60, 70) et/ou le deuxième dispositif d'écran (60, 70) étant disposé sur la surface de séparation (40') tournée vers l'élément optique d'entrée (30) de l'élément optique de sortie (40) .

14. Dispositif d'éclairage pour un phare de véhicule automobile, comprenant un, deux ou plusieurs modules d'éclairage à micro-projection (1) selon l'une quelconque des revendications 1 à 13, de préférence deux groupes ou plus de modules d'éclairage à micro-projection (AA, AA1, AA2, SS1, BF1-BF8, FL, ABL, SA1, SA2) étant prévus et chaque groupe comprenant un, deux ou plusieurs modules d'éclairage à micro-projection (1), les modules d'éclairage à micro-projection (AA, AA1, AA2, SS1, BF1-BF8, FL, ABL, SA1, SA2) d'un groupe produisant la même répartition lumineuse (LV_{AA}, LV_{AA1}, LV_{AA2}, LV_{SS1}, LV_{BF1} - LV_{BF8}, LV_{FL}, LV_{ABL}, LV_{SA1}, LV_{SA2}) et les modules d'éclairage à micro-projection (AA, AA1, AA2, SS1, BF1-BF8, FL, ABL, SA1, SA2) des différents groupes produisant des répartitions lumineuses différentes (LV_{AA}, LV_{AA1}, LV_{AA2}, LV_{SS1}, LV_{BF1} - LV_{BF8}, LV_{FL}, LV_{ABL}, LV_{SA1}, LV_{SA2}). les sources lumineuses de chaque groupe de modules d'éclairage à micro-projection pouvant être commandées indépendamment des sources lumineuses des autres groupes.

15. Projecteur de véhicule automobile avec un ou plusieurs dispositifs d'éclairage selon la revendication 14.
